(19)

**Europäisches Patentamt**
**European Patent Office**
**Office européen des brevets**

(11)    **EP 4 030 383 A1**

(12)    # EUROPEAN PATENT APPLICATION

(43) Date of publication:
**20.07.2022   Bulletin 2022/29**

(21) Application number: **21198398.6**

(22) Date of filing: **22.09.2021**

(51) International Patent Classification (IPC):
**G06T 7/33** *(2017.01)*          **G06K 9/62** *(2022.01)*
**G06N 3/04** *(2006.01)*          **G06N 3/00** *(2006.01)*
**G06V 10/44** *(2022.01)*          **G06V 10/82** *(2022.01)*
**G06V 20/56** *(2022.01)*          **G06N 7/00** *(2006.01)*

(52) Cooperative Patent Classification (CPC):
**G06K 9/6272; G06N 7/005; G06T 7/33;**
**G06V 10/44; G06V 10/82; G06V 20/56;**
G06N 3/0454; G06T 2207/30252

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:   **17.12.2020   US 202017125360**

(71) Applicant: **INTEL Corporation**
**Santa Clara, CA 95054 (US)**

(72) Inventors:
 • **CAMPOS MACIAS, Leobardo**
  **44240 Guadalajara (MX)**
 • **FABILA GARCIA, German**
  **45238 Zapopan (MX)**

 • **GOMEZ GUTIERREZ, David**
  **45600 Tlaquepaque (MX)**
 • **KRISHNAMURTHY, Sundar Rajan**
  **Sunnyvale, 94089 (US)**
 • **LIANG, Le**
  **Hillsboro, 97124 (US)**
 • **LU, Lu**
  **Hillsboro, 97124 (US)**
 • **MENDOZA, Paulino**
  **45066 Zapopan (MX)**
 • **MUMTAZ, Sami**
  **58260 Morelia (MX)**
 • **ZAMORA ESQUIVEL, Julio Cesar**
  **West Sacramento, 95605 (US)**
 • **CAMACHO PEREZ, Jose Rodrigo**
  **44160 Guadalajara (MX)**

(74) Representative: **2SPL Patentanwälte PartG mbB**
**Landaubogen 3**
**81373 München (DE)**

(54)    **PROBABILISTIC SAMPLING ACCELERATION AND CORNER FEATURE EXTRACTION FOR VEHICLE SYSTEMS**

(57)    Techniques are disclosed for the acceleration of the operation of a probabilistic sampling device for applications including homography estimation and wireless signal detection, which may include reducing the number of iterations associated with probabilistic sampling. Techniques are also disclosed for corner feature extraction from event-based cameras, which may be implemented via an Advanced Driver Assistance System (ADAS) or Autonomous Driving (AD) system.

FIG. 1

**EP 4 030 383 A1**

**Description**

TECHNICAL FIELD

Aspects described herein generally relate techniques for techniques to accelerate probabilistic sampling and corner feature extraction, which may be implemented by Advanced Driver Assistance Systems (ADAS) or Autonomous Driving (AD) systems.

BACKGROUND

Advanced Driver Assistance Systems (ADAS) or Autonomous Driving (AD) systems often implement several video cameras. In these systems, aligning or stitching the images is critical for the subsequent analysis and object detection. Moreover, many ADAS or AD systems also implement event-based cameras, which can detect the intensity change in a scene and enable the detection and correction of the relative location of vehicles in a faster manner. Current techniques for implementing such systems have thus far been inadequate.

BRIEF DESCRIPTION OF THE DRAWINGS/FIGURES

The accompanying drawings, which are incorporated herein and form a part of the specification, illustrate the aspects of the present disclosure and, together with the description, and further serve to explain the principles of the aspects and to enable a person skilled in the pertinent art to make and use the aspects.

FIG. 1 illustrates a state of the art approach for creating a panoramic view from multiple camera views.
FIG. 2 illustrates a state of the art approach for converting a front camera view into a bird's eye view.
FIG. 3 illustrates an example of how unsafe situations may be prevented by merging images from multiple sources into a single road scenario, in accordance with one or more aspects of the present disclosure.
FIG. 4 illustrates an example block diagram of a system architecture implementing a probabilistic sampling accelerator, in accordance with one or more aspects of the present disclosure.
FIG. 5 illustrates an example block diagram of a probabilistic sampling accelerator, in accordance with one or more aspects of the present disclosure.
FIG. 6 illustrates an example process flow, in accordance with one or more aspects of the present disclosure.
FIG. 7 illustrates an example of block diagram showing additional details of the probabilistic sampling process, in accordance with one or more aspects of the present disclosure.
FIG. 8A illustrates example simulations of packet error rate (PER) versus signal-to-noise ratio (SNR) performance for wireless signal detection, in accordance with one or more aspects of the present disclosure.
FIG. 8B illustrates example simulations of mean square error (MSE) versus the number of image features for homography estimation, in accordance with one or more aspects of the present disclosure.
FIG. 9 illustrates an example block diagram showing additional detail of a probabilistic sampling device, in accordance with one or more aspects of the present disclosure.
FIG. 10A illustrates an example of original and transformed images, in accordance with one or more aspects of the present disclosure.
FIG. 10B illustrates an example of original and transformed images with extracted features and their locations, in accordance with one or more aspects of the present disclosure.
FIG. 10C illustrates an example of original and transformed images with a subset of extracted features and their locations that are orthogonal to one another, in accordance with one or more aspects of the present disclosure.
FIGs. 11A-11D illustrate examples of rules for identifying orthogonal feature sets using various shapes, in accordance with one or more aspects of the present disclosure.
FIG. 12 illustrates an example of ideal versus non-ideal features in accordance with a circular shape-based rule for identifying orthogonal feature sets, in accordance with one or more aspects of the present disclosure.
FIG. 13 illustrates an example simulation result showing the probabilistic sampling process converging to a solution for a homography matrix over a number of iterations for different sets of features, in accordance with one or more aspects of the present disclosure.
FIG. 14 illustrates an example process flow, in accordance with one or more aspects of the present disclosure.
FIG. 15 illustrates an example event image, in accordance with one or more aspects of the present disclosure.

The exemplary aspects of the present disclosure will be described with reference to the accompanying drawings. The drawing in which an element first appears is typically indicated by the leftmost digit(s) in the corresponding reference number.

DETAILED DESCRIPTION

In the following description, numerous specific details are set forth in order to provide a thorough understanding of the aspects of the present disclosure. However, it will be apparent to those skilled in the art that the aspects, including structures, systems, and methods, may be practiced without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring aspects of the disclosure.

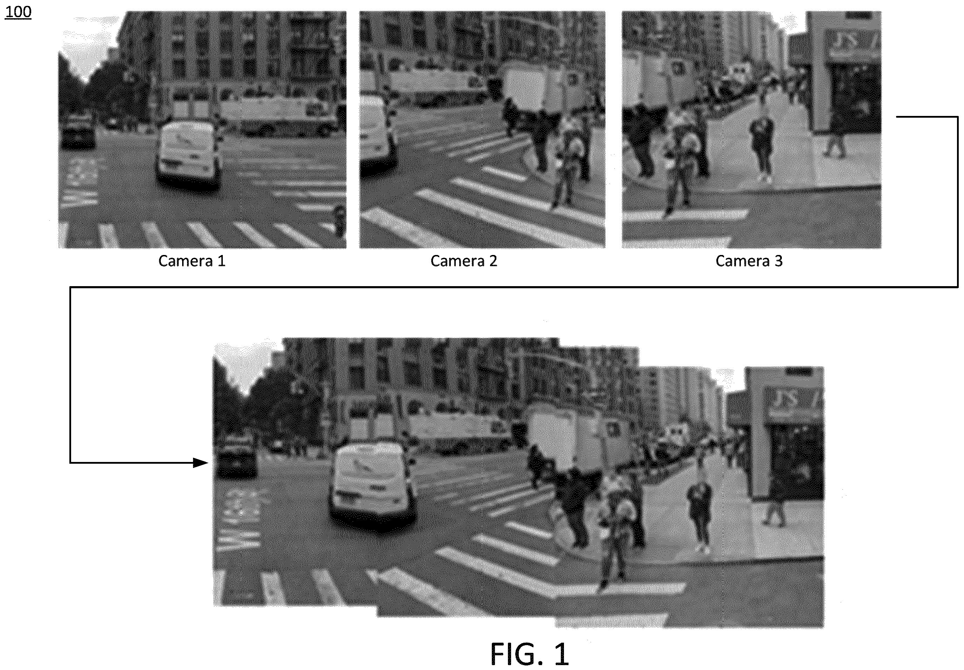

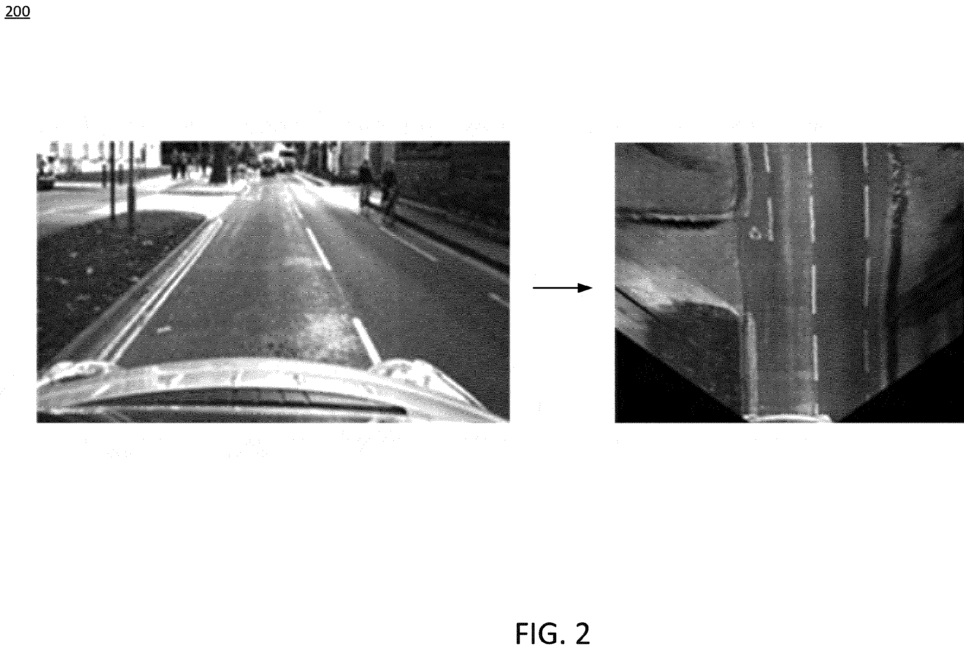

Again, ADAS or AD systems may utilize several video or other types of cameras (e.g. event cameras), and aligning or stitching the features captured by these camera systems is critical for analysis and object detection. This also applies to images captured from sensors of different vehicles or roadside infrastructure to reconstruct a road scenario, as well as images obtained from other modalities such as radio detection and ranging (radar) or light detection and ranging (LIDAR). For this purpose, the estimation of homographies, or the transformations that relate the color and position of points or features in two images, is required to properly merge multiple images. For example, a "panoramic" view of an intersection can be assembled from multiple camera views as shown in FIG. 1, which provides an example that does not use homographic corrections for simplicity. Alternatively, and as shown in FIG. 2, multiple camera images such as the one shown on the left may be used to create an artificial bird's eye view such as the one shown on the right.

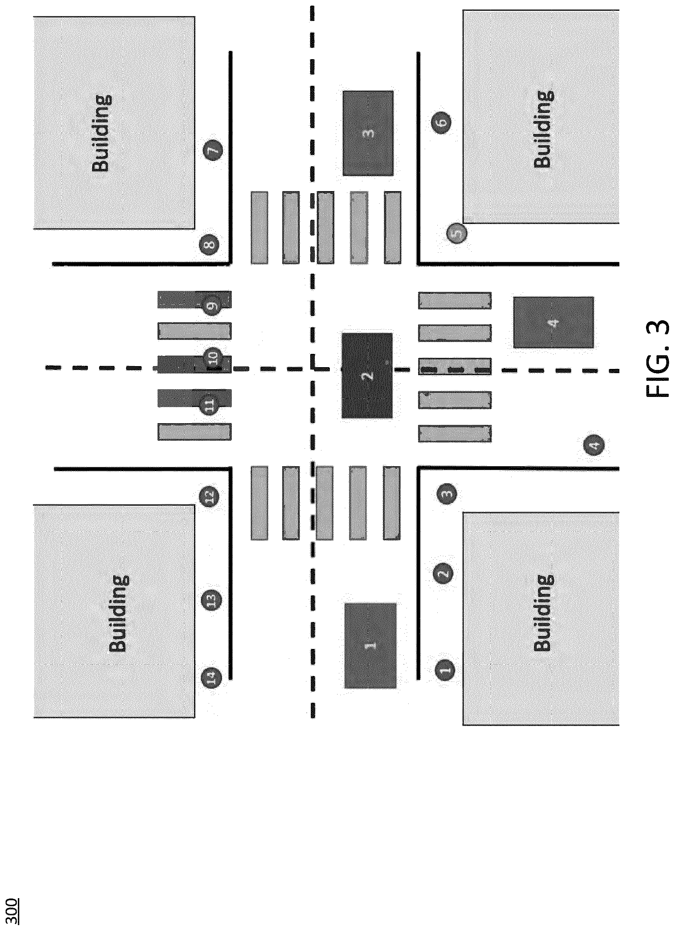

As another example, merging images from multiple cameras in multiple cars and/or road infrastructure enables the synthesis of complex road scenarios relating car, pedestrians, and other objects even in occluded locations. As an illustrative example, FIG. 3 shows a road scenario 300 in which the pedestrian 4 is not originally visible from the view point of car 1, but becomes visible after merging the views of multiple cars and roadside cameras. Therefore, merging multiple camera images together from multiple sources may prevent potentially hazardous situations. Some current solutions utilize homography estimation to perform such merging or stitching of two or more images, but these solutions are inadequate. For instance, conventional approaches to performing homography estimation include Random Sample Consensus (RANSAC), which iteratively selects small subsets of image features. At each iteration, a homography matrix H is estimated, and the samples that meet some predefined criteria of the quality of the estimation are kept. After a maximum number of iterations is reached, the matrix H is deemed to be estimated. Thus, RANSAC requires relatively intensive computation because it solves for the homography matrix H multiple times until a maximum number of iterations are performed, and then H is solved one more time.

In both RANSAC and the aspects that are described in further detail below, features are identified and stored in a matrix S before estimating the matrix H. Thus, as a general matter, RANSAC iteratively selects (randomly or otherwise) small subsets (e.g. a minimum of 4 for homography) of features, which maybe expressed as

$S_{sub}$ of the matrix S. At each iteration, the homography matrix H is estimated with $S_{sub}$ and the samples that meet the predefined criteria of the quality of the estimation of matrix H are maintained, which may be expressed as $S_{keep}$. After a maximum number of iterations is reached, the matrix H is estimated with $S_{keep}$. In contrast, and as further discussed below, the aspects described herein apply a Markov Chain Monte Carlo sampler (e.g. a Markov Chain Monte Carlo Gibbs sampler) that initially assumes some prior knowledge of the target distribution of a matrix H (or the matrix S, depending upon which is being solved, as further discussed below). Then, the full set of data in the matrix S is used to iteratively generate samples of the matrix H having a mean that tends to the mean of the target distribution. The Markov Chain Monte Carlo sampler will stop if the mean of the estimations is not changing, as further discussed in the Appendix with respect to Equation A1.4a.

Therefore, even though the aspects described herein and the RANSAC technique are each iterative in nature, the aspects described herein advantageously implement the Markov Chain Monte Carlo sampler to exploit prior knowledge of the probability density function (PDF) of the matrix H while the RANSAC technique fails to do so. In addition, the RANSAC technique solves for the matrix H multiple times until a maximum number of iterations are performed, and then the matrix H is estimated a final time. The Markov Chain Monte Carlo sampler solver, however, stops if the mean converges. Moreover, and as further discussed below, defining the set of data in the matrix S as an orthogonal matrix reduces the sampling to a single iteration, as discussed in the Appendix A2 and Section II. The aspects described herein also provide a device for both wireless signal detection and homography estimation, with either being determined via the configurability of solving for S or H.

The aspects described herein may also leverage the use of event cameras, which enable the detection and correction of the relative location of vehicles in a faster manner. However, the use of event cameras adds an extra challenge, as traditional vision-based processing techniques cannot be used if it is desired to utilize the high-frequency data acquisition. Hence, the aspects described herein also include techniques to perform corner feature detection to save computing the entire event-image and only focus on pixels that triggered an event (e.g. non-zero pixels), considering the time dependency of the triggered events.

The present disclosure is organized into three different Sections for clarity and ease of explanation. Section I is directed to aspects of a probabilistic sampling accelerator for the acceleration of homography estimation or wireless signal recovery. Section II is directed to aspects of techniques for reducing the number of iterations associated with the probabilistic sampling, which may be implemented by the device described in Section I or other suitable devices. Section III is directed to techniques for feature extraction from event cameras, which may be implemented via the same vehicle (e.g. an ADAS or AV) that is implementing the device as described in Section I, Section II, and/or other suitable vehicles. The devices and techniques as described herein with reference to each of the Sections I, II, and III may be combined with one another or be implemented separately, in various aspects.

Section I - A probabilistic sampling accelerator

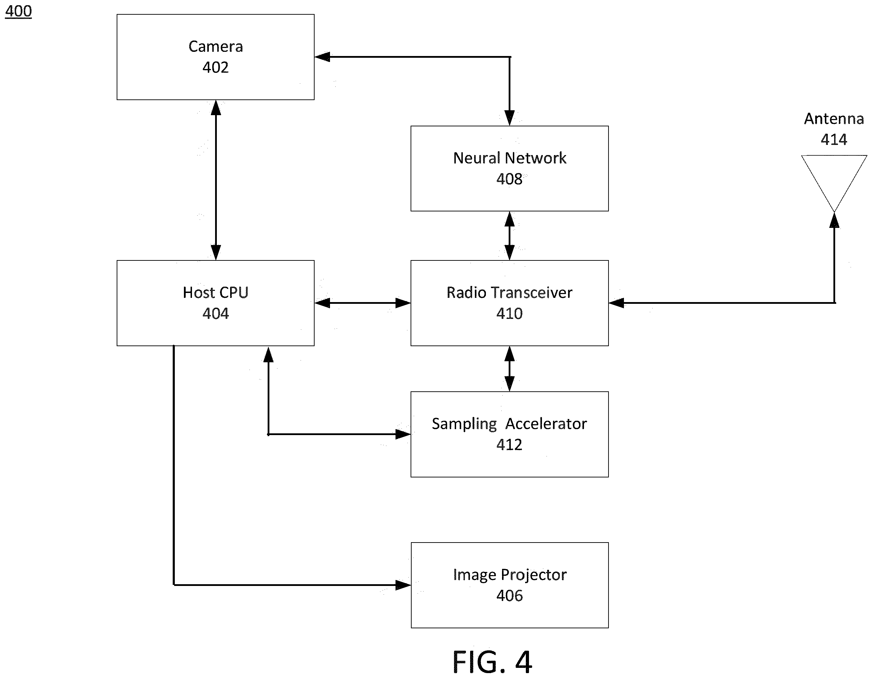

FIG. 4 illustrates an example block diagram of a system architecture implementing a probabilistic sampling accelerator, in accordance with one or more aspects of the present disclosure. The system architecture 400 as shown in FIG. 4 may implement the probabilistic sampling accelerator, or simply sampling accelerator 412, which may be reconfigured depending upon the particular application to solve for a homography matrix H, a wireless channel matrix H, a feature set matrix S, or an original transmitted signal data matrix S depending upon the particular application. Therefore, unless otherwise noted, the use of the terms H matrix and S matrix may apply to either of these applications, although it is assumed that in the context of homography applications that the H matrix represents the homography matrix and the S matrix represents the feature set matrix S. The term "homography" includes transformations that relate the color and position of points in two different images. Again, merging images may have various applications, particularly with respect to the vision systems used in ADAS and AD vehicles for image analysis and object recognition. It is noted that although several examples are provided herein using images obtained via video capture and/or or camera-based devices, this is by way of example and not limitation. The term "image" as used herein may include images obtained via camera and/or as video, but may additionally or alternatively include images obtained via other types of sensors or imaging modalities, such as thermal sensors, LIDAR, radar, sonar, etc. Thus, the aspects described herein may be implemented using any suitable number and/or type of source such as a sensor or other modality that produces images that may be suitably related to one another via the various homography estimation techniques as described herein to perform stitching or for other suitable purposes. Furthermore, in the context of wireless signal communication applications, the H matrix represents the channel matrix and the S matrix represents the wireless signal data matrix S associated with the originally transmitted signal data. The data constituting the R matrix, H matrix, and S matrix may alternatively be referred to herein as respective data sets.

With reference to FIG. 4, the aspects described in this section are directed primarily to the sampling accelerator 412, which forms part of the system architecture 400. The system architecture 400 may be implemented as any suitable type of device that may utilize or otherwise benefit from merging images from multiple cameras within the same device or from different sources, which may implement the homography estimation techniques described herein and/or the use of wireless signal recovery techniques. For example, the system architecture 400 may form part of an ADAS or AD vehicle, a drone configured to perform automatic of self-navigating functions, etc.

The system architecture 400 as shown in FIG. 4 may include a camera 402, a host CPU 404, an image projector 406, a neural network 408, a radio transceiver 410, a sampling accelerator 412, and an antenna 414. The components shown FIG. 4 are shown by way of example and not limitation, and the system architecture 400 may include additional, fewer, or alternate components as those shown in FIG. 4. Moreover, the functionality described with respect to each of the components of the system architecture 400 is by way of example, to provide clarity, and for ease of explanation. The various components that form part of the system architecture 400 may be combined with one another and/or share functionality with other components, in various aspects.

The camera 402 may represent one or more cameras associated with the device in which the system architecture 400 is implemented, and may include any suitable number and/or type of cameras that may capture video and/or image data within a particular field of view of the device. For example, the camera 402 may be implemented as a static type camera that captures images or a dynamic type camera that captures events (e.g. an event camera).

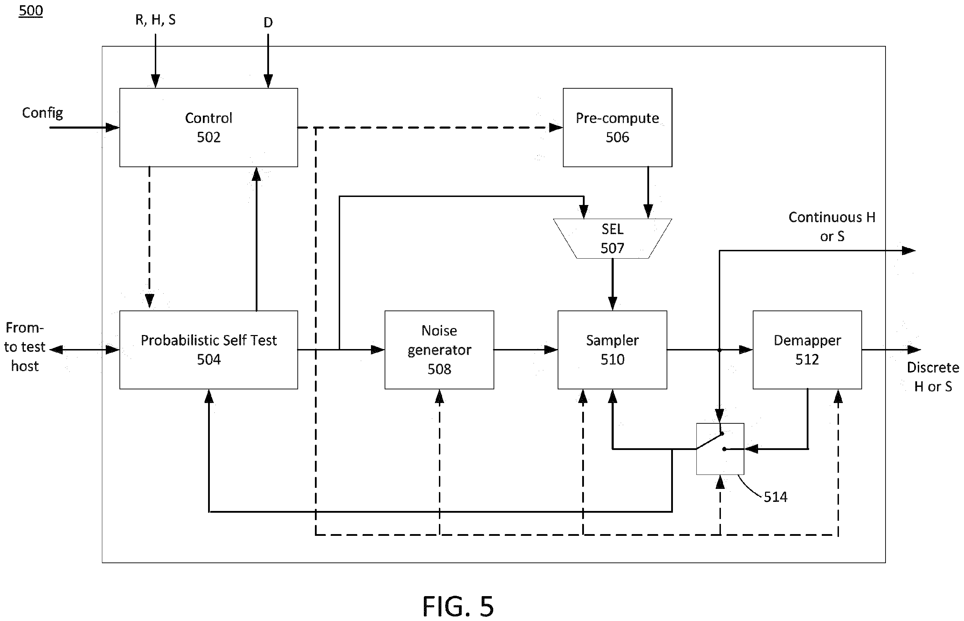

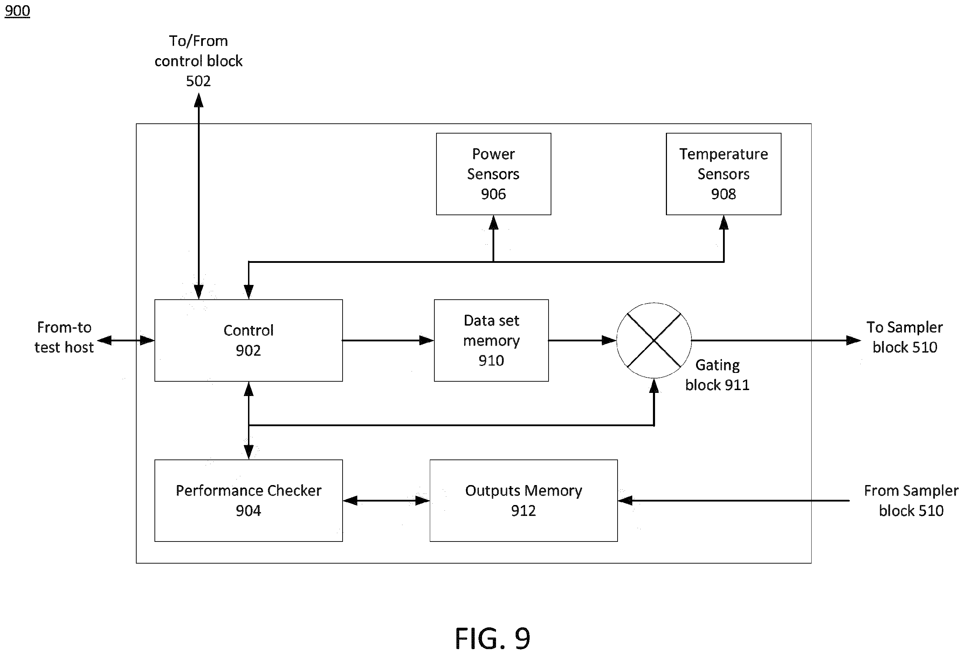

The host CPU 404 and sampling accelerator 412 may be configured as processing circuitry, one or more processors, hardware, and/or software components, and form part of any suitable type of component or platform to communicate with one another and other components of the system architecture 400 as shown in FIG. 4 by the connected arrows. Thus, the arrows shown in FIG. 4 (as well FIG. 5 and 9) may represent interconnections, interfaces, data ports, buffers, etc., or any suitable configuration of wired and/or wireless links to facilitate the transfer of data between the connected components. In various aspects, the host CPU 404 and sampling accelerator 412 may be configured as any suitable number and/or type of computer processors, which may function to control the device in which the system architecture 400 is implemented and/or other components of the system architecture 400. The host CPU 404 and sampling accelerator 412 may be identified with one or more processors (or suitable portions thereof) implemented by the system architecture 400, but which may perform different functions or be implemented in different ways to perform their respective functions. For example, the host CPU 404 may be configured to perform operational functions for the device in which the system architecture 400 is implemented, to otherwise control the operation of such a device as well as the functionality and operation of other components of the system architecture 400, and to pass data received from the camera 402 to the sampling accelerator 412 for processing. The sampling accelerator 412 may be configured to perform the various sampling calculations as discussed herein, and to provide the result of these calculations to the host CPU 404, which may then perform image merging, signal recovery, and/or other suitable data processing using these results. In any event, the host CPU 404 and the sampling accelerator 412 may, for example, be identified with one or more processors such as a digital signal processor, one or more microprocessors, graphics processors, microcontrollers, an application-specific integrated circuit (ASIC), part (or the entirety of) a field-programmable gate array (FPGA), etc.

Aspects include the host CPU 404 and the sampling accelerator 412 being configured to carry out instructions to perform arithmetical, logical, and/or input/output (I/O) operations to perform various functions associated with the aspects as described herein. For example, the host CPU 404 and the sampling accelerator 412 may include one or more microprocessor cores, memory registers, buffers, clocks, etc., and may generate electronic control signals associated with electronic components to control and/or modify the operation of one or more components of the vehicle or other suitable device in which the system architecture 400 is implemented as discussed herein.

In an aspect, the host CPU 404 and the sampling accelerator 412 may store or otherwise access data and/or instructions such that, when the instructions are executed by the host CPU 404 or the sampling accelerator 412, as the case may be, cause the host CPU 404 or the sampling accelerator 412, respectively, to perform various functions as described herein. The memory is not shown in the Figures for purposes of brevity, but may be integrated as part of the host CPU 404 and/or the sampling accelerator 412, or accessed from a separate device. Such a memory may be implemented as any well-known volatile and/or non-volatile memory, including, for example, read-only memory (ROM), random access memory (RAM), flash memory, a magnetic storage media, an optical disc, erasable programmable read only memory (EPROM), programmable read only memory (PROM), etc. The memory can be non-removable, removable, or a combination of both. For example, the memory may be implemented as a non-transitory computer readable medium storing one or more executable instructions such as, for example, logic, algorithms, code, etc.

The neural network 408 may be implemented as any suitable architecture configured to perform machine learning, such as a convolutional neural network or a deep convolutional neural network, for instance. The neural network 408 may include any suitable number of inputs, outputs, layers, etc., and be configured to process data from different sources, such as data provided by the camera 402 and/or signals processed via the radio transceiver 410, for instance. The neural network 408 may be trained in accordance with any suitable type of machine learning training techniques to generate a trained model, which may interpret the received data to provide outputs used by the host CPU 404, for example, such as object detection. The neural network 408 may function in conjunction with the host CPU 404 or independently to identify features in images or event data received form the camera 402 and/or the locations of these features, as further discussed herein.

The radio transceiver 410 may be configured as any suitable number and/or type of components configured to transmit and/or receive signals in accordance with any suitable number and/or type of communication protocols. The data may be received via the antenna 414, which may include image data or other suitable data received from other devices such as other ADAS or AD vehicles, roadside infrastructure, other communication devices, base stations, etc. For example, the radio transceiver 410 may receive images from other sources as described above, which are then merged together using the homography techniques as discussed herein.

The image projector 406 may be configured as any suitable number and/or type of components configured to project any suitable type of information, which may include symbols, shapes, etc. that may be humanly-perceptible or not humanly-perceptible, onto a particular scene for which various images may be obtained via the camera 402 or other sensors not shown in FIG. 4 for purposes of brevity. For instance, the image projector 406 may be configured to project optical symbols, infrared symbols, etc. of a predetermined type and/or arrangement, which is further discussed below in Section II. This may include, for instance, projecting symbols in a scene that is acquired via the camera 402 or other suitable sensors of the device in which the system architecture 400 is implemented (e.g., an ADAS or AD vehicle), and which may then be present in the image associated with the feature set matrix S, as further discussed herein.

FIG. 5 illustrates an example block diagram of a homography estimation accelerator, in accordance with one or more aspects of the present disclosure. The sampling accelerator 500 as shown in FIG. 5 may be identified, for example, with the sampling accelerator 412 as shown in FIG. 4. Again, the various components of the sampling accelerator 500 as shown in FIG. 5 may be implemented via one or more processors, hardware components, software components, or combinations of these. For example, the sampling accelerator 500 may be implemented as an FPGA. In various aspects, the sampling accelerator 500 may receive data via the radio transceiver 410 and/or the host CPU 404 to calculate either a continuous matrix H or a continuous matrix S or, alternatively, calculate a discrete matrix H or a discrete matrix S.

As shown in FIG. 5, aspects include the host CPU 404 and/or neural network 408 performing a pre-processing operation on two or more images received via the camera 402. As part of this pre-processing operation, an image is transformed to a different coordinate system to provide a transformed image, and a set of matching features are identified in both the image prior to and after transformation, such as matching edges or corners, for example. This transformation may include, for instance, the rotation of an image to another perspective that is identified with a different pixel coordinate system. The feature identification performed in this manner may be done in accordance with any suitable techniques, including known techniques such as edge detection, for instance. Thus, in this context, the original feature set matrix S represents the respective pixel coordinates of a subset of identified features in an original image used for a specific type of image transformation that is defined by the initial estimate of the homography matrix H, prior to the transformation being performed. The transformed or reference feature set matrix R represents the pixel coordinates associated with the same set of identified features in the original image defined by the original feature set matrix S after being transformed into a new coordinate system via the application of the homography matrix H.

In other words, the preprocessing step performed by the host CPU 404 includes identifying a set of features in an image for which their respective pixel locations are known both prior to (feature set matrix S) and after the transformation (transformed feature set matrix R) by identifying the same features in each pre- and post-transformed image. Thus, the original feature set matrix S and the transformed feature set matrix R function as reference points to enable the sampling accelerator 500 to iteratively solve for a final homography matrix estimate H using a few features of the image and knowledge of how these are transformed from the original feature set matrix S into the transformed feature set matrix R via an initial estimate of the homography matrix H. In other words, the initial estimate of the homography matrix H may represent a data set that constitutes a starting or initial homography matrix H that identifies, from the set of features in an image for which respective pixel locations are known both prior to and after the transformation, how specific features are transformed to the post-transformed image. Thus, the initial estimate of the homography matrix H represents an initial data set constituting an initial homography estimation that is applied to the data set constituting the original feature set matrix S to generate the data set constituting the transformed feature set matrix R. The final estimate of the homography matrix H, when calculated, defines how each pixel coordinate within a particular image is transformed to create each pixel coordinate in a transformed image. The transformed image may be the result of any suitable type of image rotation, such as image stitching for example, which relies upon the homography matrix H to bring all images into a single (transformed) coordinate system. Thus, the calculation of the homography matrix H is a prerequisite for the image stitching or merging process, which occurs separately (e.g. via the host CPU 404) once the final homography matrix H or the final feature set matrix S, as the case may be, is calculated.

As further discussed herein, in an aspect the sampling accelerator 500 is reconfigurable and may function in accordance with various different modes of operation depending upon the type of data that is available or otherwise known to the sampling accelerator 500 or a desired application. This may include, for instance, solving for the H matrix or the S matrix and doing so in accordance with homography or wireless signal recovery applications, for instance. Thus, the sampling accelerator 500 includes a control block 502 configured to receive data associated with the matrix R, the matrix S, and the H matrix based upon the desired solution that is sought. The sampling accelerator 500, the control block 502, and/or the probabilistic self-test block 504 may include any suitable number and/or type of data interface configured to receive data from the host CPU 404 or other suitable component, and to communicate with other components of the sampling accelerator 500, as shown in FIG. 5 (e.g. to receive the data associated with the R, H, and S matrices, the discrete reference set data D, etc.), as denoted by the arrows in FIG. 5.

Although the aspects herein are described primarily with respect to the use of homography for image stitching, merging, and/or transformation, this is but one example application for which the sampling accelerator 500 may be implemented. In particular, the data and operations discussed herein may be applied to any suitable type of data or application for which the same mathematical operations as discussed herein may be applied. Again, the homography matrix H, transformed feature set matrix R, and the original feature set matrix S may be described in more general terms and may contain any suitable type of data depending upon the particular application. For example, aspects include the sampling accelerator 500 additionally or alternatively processing wireless signals received via the radio transceiver 410. In this case, and as further discussed herein, the homography matrix H may instead represent the channel matrix H, the original feature set matrix S may alternatively be identified with data encoded in or otherwise associated with at least a portion of a transmitted wireless signal, and the transformed feature set matrix R may alternatively be identified with the transformation of the transmitted wireless signal via the application of the channel matrix H or the received signal data.

Thus, depending upon the particular application, the sampling accelerator 500 may function to solve for either the matrix H or the matrix S, and may do so in accordance with different types of calculations and solving techniques depending upon the type data the matrix H and the matrix S represent, in various aspects. Moreover, the control block 502 may also receive a discrete reference set data D, which may represent a discrete set of pixel locations within one or more images (e.g. for homography applications) or a discrete set of symbols (e.g. for wireless communication applications). The particular mode or application for which the sampling accelerator 500 is configured may thus be controlled by the control bock 502, which may receive configuration data from the host CPU 404, for instance. The configuration data may instruct the control block 502 with respect to whether a solution is to be sought for either the H matrix or the S matrix, if a discrete solution is to be obtained, if real or complex data is present, the maximum number of iterations for the sampler 510, a maximum amount of error, etc.

In other words, the sampling accelerator 500 may solve for the H matrix when sufficient data is received with respect to S matrix, and vice-versa. As illustrative examples, the sampling accelerator 500 may solve for the homography matrix H when sufficient data is provided in the feature set matrix S and the transformed feature set matrix R to enable these initial calculations. Alternatively, the sampling accelerator 500 may solve for the S matrix when the wireless channel matrix H and the received signal data identified with the R matrix (i.e. the received signal matrix R) are both available to recover the originally transmitted data represented by the S matrix. Thus, the control block 502 is configured to estimate an initial H matrix (when the S matrix and the R matrix are known) or to apply homography or other suitable transformations using suitable configuration definitions to estimate an initial S matrix when the channel matrix H and the received signal matrix R are known and the S matrix is not known (e.g. for wireless signal recovery applications). Additional details regarding the mathematical computations for this process are shown in Section A4 of the Appendix at the end of this disclosure. Regardless of the particular data type or whether a solution is calculated for the H matrix or the S matrix, aspects include the H matrix or the S matrix being calculated as a continuous set of data or, when the discrete reference set data D is provided, an optional demapper block 512 may facilitate the calculation of the H matrix or the S matrix as a discrete set of data, as further discussed below.

Additionally, the control block 502 is configured to connect or disconnect the internal connections between components represented by the dashed lines in FIG. 5. This may include, for instance, disconnecting the respective components when a self-test is executed, as further discussed below, and then preforming a reconnection of these components during a standard mode of operation. Aspects further include the control block 502 being configured to control the state of the selector block 507 and the switching block 514 depending upon the particular mode of operation of the sampling accelerator 500 (e.g. test mode or standard mode of operation), and whether the H matrix or the S matrix is calculated as a continuous solution or a discrete solution, as further discussed below.

The self-testing feature as further discussed below may be facilitated by the probabilistic self-testing block 504, which may communicate with the control block 502 to change the status of the connections between components of the sampling accelerator 500. For instance, during the test mode, the solid lines may be connected between the various components and the dashed lines disconnected, whereas during the normal mode of operation these connections may be reversed or, alternatively, the solid lines may remain connected when the self-test is not being executed as shown in FIG. 5. For ease of explanation, the operation of the sampling accelerator 500 is first discussed with reference to the standard mode of operation, in which the control block 502 receives data associated with the R, H, and S matrices, and optionally receives the discrete reference set data D.

With continued reference to FIG. 5, the sampling accelerator 500 further includes a noise generator block 508, a pre-computation block 506, a sampler block 510, as well as the optional demapper block 512 and an optional switching block 514, as noted above. The sampler block 510 may be implemented as a probabilistic sampling element, for instance. As an example, the sampler block 510 may be implemented as a Markov Chain Monte Carlo Gibbs sampler, as discussed herein, although this is by way of example and not limitation and any suitable type of Markov Chain Monte Carlo sampler or other suitable samplers may be utilized. The calculations for either the H matrix or the S matrix, as the case may be, are performed via a combination of the pre-computation block 506 and the sampler block 510, as during the normal or standard mode of operation the select block 507 feeds data from the pre-computation block 506 to the sampler block 510. The pre-computation block 506 receives data associated with at least two of the R, H, and S matrices from the control block 502 along with an indication of which quantity is to be solved (e.g. the H matrix or the S matrix), and whether the solution is performed using the discrete reference set data D to provide a discrete solution using the demapper block 512, or a continuous solution that does not require demapping or the discrete reference set data D. If the discrete solution is to be calculated, the pre-computation block 506 may also receive the discrete reference set data D from the control block 502.

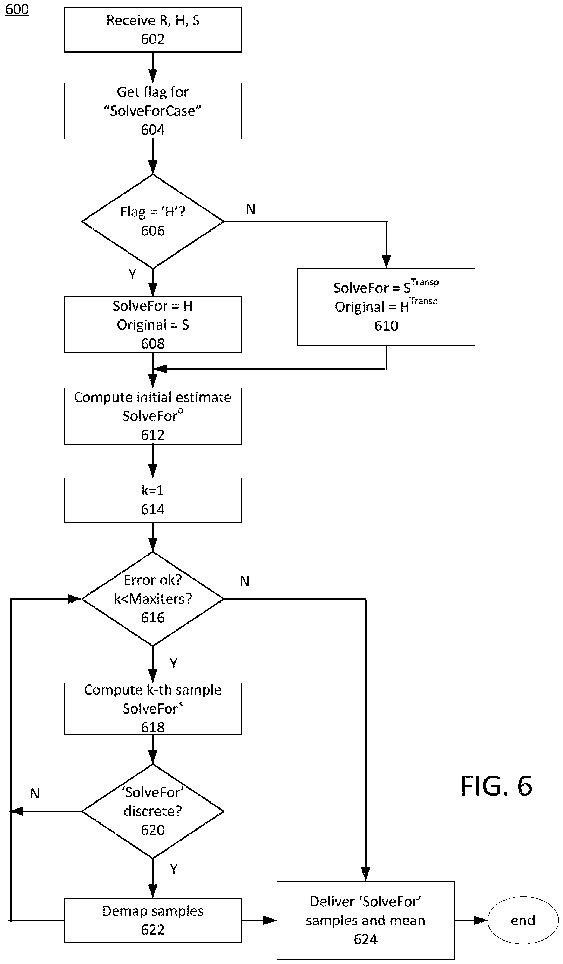

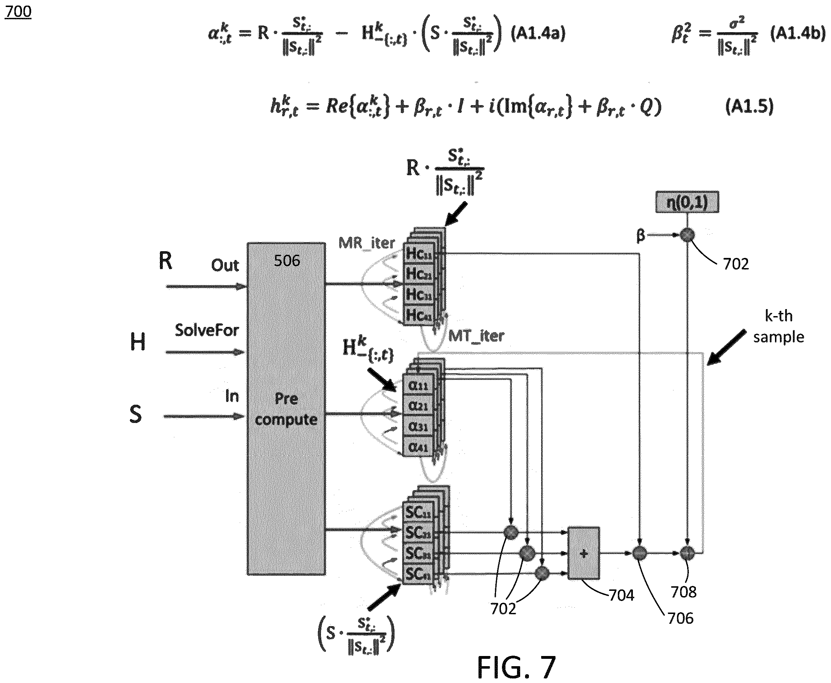

The process (e.g. algorithm) executed by the pre-computation block 506 and the sampler block 510 are shown in further detail in FIGs. 6 and 7 and further discussed below. As a general overview, the noise generator block 508 is used to generate noise (e.g. additive white Gaussian noise) as described in the Appendix with respect to Equations A1.1 and A1.2. In an aspect, the noise generator block 508 may be implemented as a Gaussian random number generator, although this is by way of example and not limitation, and the noise generator block 508 may be implemented as any suitable type of noise generator configured to generate any suitable type of noise that conforms to a set of standards and/or metrics. The noise generated by the noise generator block 508 and processing performed via the pre-computation block 506 enable the sampler block 510 to generate a Markov Chain Monte Carlo set of samples that approximate a solution for the H matrix or the S matrix, as the case may be. For example, as discussed in the Appendix at Section A1, the additive Gaussian white noise may follow the same probability density function (PDF) as the quantity R — H · S, and the PDF of the additive Gaussian white noise may be proportional to the expression as shown in the Appendix at Equation A1.2, from which samples may be drawn by the sampler block 510 over a number of iterations to converge to a solution. In other words, samples may be synthesized and generated that approximately conform to the underlying PDF of the physical process that produced the data sets (e.g. the S and R matrices if a solution to the H matrix is being calculated), such that the samples converge to a solution. The PDF may represent or be proportional to a function that represents a difference between the data represented by the transformed data set (the R matrix) and the result of the application of the transformation matrix (the H matrix) and the original data set (the S matrix) used to generate the transformed data set. The PDF may thus be considered as being "embedded" as part of the underlying physical process that generated the data sets (e.g. the S and R matrices in the current example). Optionally, the demapper block 512 may map or demap the output of the sampler block 510 to a reduced or discrete set of pixel coordinate locations, data symbols, etc., depending upon the particular application.

For example, as shown in FIG. 6, the pre-computation block 506 receives (block 602) data from the control block associated with the R, H, and/or S matrices as discussed herein. The pre-computation block 506 then obtains (block 604) a flag from the control block 502 indicating which particular matrix solution is to be obtained, i.e. the H matrix or the S matrix. Thus, at block 606 the pre-computation block 506 identifies which quantity from Equation 1 in the Appendix that the sampler block 510 should solve. If this is the H matrix, then the process 600 continues to block 608 to solve for the H matrix; otherwise the process 600 continues to block 610 to solve for the $S^{Transp}$ matrix, which is equivalent to the alternative expression of the transpose matrix of S, or $\bar{S}$, which may be used for the calculation of the S matrix as discussed in further detail in the Appendix sections A4 and A5.

Irrespective of which matrix quantity is being solved, the process 600 proceeds to compute (block 612) an initial estimate for $SolveFor^0$, which may be calculated by the sampler block 512, for example. The term "Solve-For" as used herein, including in the Appendix, is a term that represents either the H matrix or the S matrix that is being computed depending upon the current configuration of the pre-computation block 506 and the sampler block 510, as discussed herein. The superscript notation of '0' in this example represents an initial solution selected by the sampler block 510 that represents the initial estimation of the particular variable that is being solved. This is shown and explained in further detail with respect to the Appendix section A5, equation A5.6, which pro-

$$SolveFor^0 = Out \cdot \frac{In^*}{\|In\|^2}$$

vides the relationship                                                                           .

Additional details of the sampler block 510 are shown in FIG. 7, which references equations A1.4a, A1.4b, and A1.5 from the Appendix, Section A1. In the example shown in FIG. 7, a solution is being calculated for the H matrix, which starts in the process 600 at the block 608 in FIG. 6. Continuing this example, once the initial estimate of the H matrix is calculated, which may be denoted as $SolveFor^0$ or, alternatively, as $H^0$, the sampler block 510 begins the probabilistic sampling process by initializing the step index k to 1 (block 614). The process 600 then includes a performing a check (block 616) regarding whether the current error is less than an established threshold value and/or whether the maximum number of iterations (Maxiters) has been reached. Until at least one of these conditions is met, the process 600 continues to iteratively generate synthetic samples at each k-th iteration in accordance with the Equations A1.4a, A1.4b, and A1.5 as shown and described in the Appendix. This may include, for instance, generating new samples at each iteration (block 618) that attempt to approximate the underlying PDF as described above, and feeding back the generated synthetic samples to the sampler block 510 after each iteration via the switching block 514 as shown in FIG. 5. FIG. 7 shows a block diagram of a sampling process by way of example and not limitation, as any suitable type of sampling processes may be implemented in accordance with the aspects described herein.

As indicated by the arrow, a k-th sample of the H matrix (in this example) is fed back to the sampler block 510 to continue the iterative probabilistic sampling process. Optionally, aspects include each k-th sample being transmitted or otherwise provided to the host CPU 404. Therefore, the equations as shown in FIG. 7, which are reproduced from the Appendix for clarity, provide an example that defines the overall sampling process. The block diagram in FIG. 7 illustrates the manner in which the equations as shown may be implemented as part of a physical application, which include the use of the dot product operation blocks 702, summation block 704, subtraction block 706, and additive block 708. Each of these blocks may be implemented as any suitable combination of hardware and/or software, which may be implemented by the sampler block 510 as discussed herein with respect to FIG. 5 for instance.

As shown in FIG. 7, the dot product operation blocks 702 function to perform a regular array dot product operation on each element in the S matrix (SC elements) to generate a number (scalar). The summation block 704 then adds these numbers (scalars), and provides this as an input to the subtraction block 706, which subtracts the scalars from the elements of the H matrix in this example. The resulting output is then summed with the product of Beta (referenced in Eq. A1.4b) and a sample η generated via the noise generator 508 via the additive block 708 during each iteration. The sample $\eta$ generated via the noise generator 508, which may again be implemented as a Gaussian random number generator for example, may have a mean of 0 and a variance of 1 in this example. This multiplication operation is shown in further detail in Equation A1.5 and discussed in the Appendix, as the sample $\eta$ corresponds to the 'I' and 'Q' terms as shown in Equation A1.5. The resulting output of the additive block 708 thus provides each k-th sample during each respective iteration, as further discussed in the Appendix.

Thus, the process of generating synthetic samples of H matrix values continues over a successive number of iterations until the H matrix values progressively approach a statistically expected set of values for the H matrix (in this example). The mean of the H matrix values represent an estimated homography in this example, i.e. the estimated set of matrix values for the homography matrix H.

If the solution is not a discrete one (block 620, 'N'), then once the maximum error is reached and/or the maximum number of iterations performed, the process 600 ends by the sampler block 510 outputting the set of samples generated during the number of k iterations and the mean of these samples as the solution (block 624). The mean of the synthesized samples may be identified with the continuous H or S matrix data as shown in FIG. 5, depending upon the particular solution that is sought. However, if the solution is a discrete one (block 620, 'Y'), then once the maximum error is reached and/or the maximum number of iterations performed, the process 600 ends by the sampler block 510 outputting the set of samples generated during the number of k iterations to the demapper block 512, which demaps (block 622) the samples in accordance with any suitable demapping technique based upon the discrete reference set data D, which may be identified with the discrete H or S matrix data as shown in FIG. 5. For example, the switching block 514 may be in a different position than that shown in FIG. 5 to enable feedback of the output of the demapper block 512 to the sampler block 510 after each sampling and demapping iteration, which enables the sampler block 510 to iteratively receive the demapper output as feedback.

The demapping at block 622 may be performed by the demapper block 512 and may include, for instance, finding a symbol in the discrete reference set data D that is closest to the estimate, and then using that symbol as the estimated value. For example, if an element of the H matrix $H_{11}$ may only take on values of 1, 2, and 3, and the estimated value is 1.1, then the output of the demapper block 512 (and then the sampler block 510) would be 1 instead of 1.1. In other words, and as an illustrative example, the demapper block 512 may assign a value that replaces an output of the sampler block 510 such as an H matrix element $h_{est}$ with the closest value in the discrete reference set data D, which may be represented formally as follows:

$$\operatorname{argmin}\,(d - h_{est})^2 \; d \in D,$$

where the square of the difference is used in this example as the distance metric, although aspects include other metric being used depending upon the particular application.

Regardless of whether the S or H matrix solution is obtained, and regardless of whether this solution is a discrete or a continuous one, aspects include the mean of the H or S samples, as the case may be, being calculated to obtain the H or S matrix estimate. This calculation may be performed, for example, via the host CPU 404, for example, the control block 502, etc. This calculated quantity may then be utilized in accordance with the relevant solution such as image stitching, wireless signal recovery, etc., via the host CPU 404, for example, or any other suitable component. Of course, additional computations may be performed on the set of H or S matrix values (e.g. mode) depending on the particular need and usage. The sampling accelerator 500, the sampler block 510, and/or the demapper 512 may include any suitable number and/or type of data interface configured to output the continuous H or S matrix data or the discrete H or S matrix data, as the case may be, as denoted by the arrows in FIG. 5.

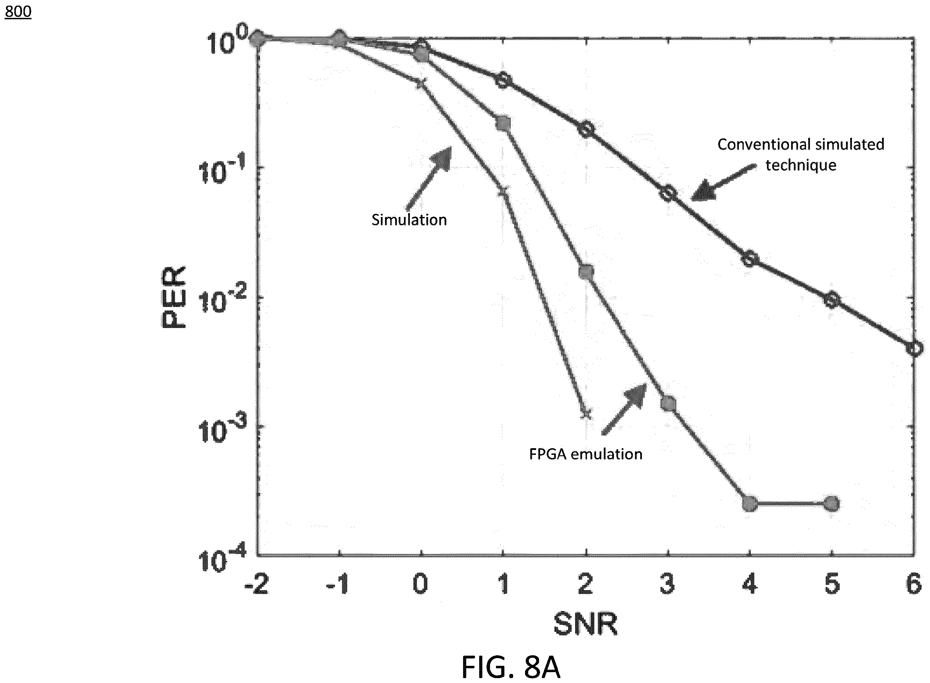

Again, the aspects described herein may implement the sampling accelerator 500 as shown in FIG. 5 for different types of applications, including reconfiguration to implement both wireless and homography estimation tasks. To demonstrate the ability to do so, FIG. 8A shows results from an FPGA emulation and simulation performed in accordance with the aspects described herein with respect to the sampling accelerator 500 as shown in FIG. 5, as well as a conventional technique for wireless signal detection. Thus, the graph shown in FIG. 8A is an example in which the matrix S is solved to recover a transmitted wireless signal for a signal detection application.

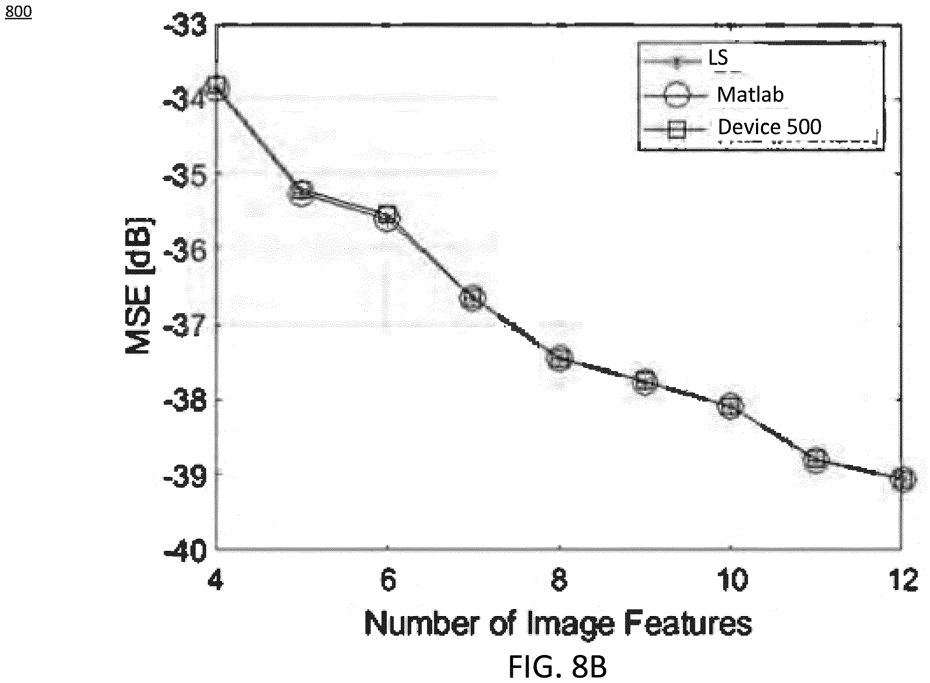

FIG. 8B illustrates simulations of homography estimation and, in particular, illustrates a graph of mean square error (MSE) of the estimation of 10,000 random 3x3 matrices representing homography matrices H. The graph shown in FIG. 8B illustrates simulations in accordance with least squares (LS) techniques, Matlab, and a simulation performed in accordance with the aspects described herein with respect to the sampling accelerator 500 as shown in FIG. 5.

With reference to FIG. 8A, the packet error rate (PER) is shown for the signal detection using wireless channels for different levels of signal-to-noise ratio (SNR). The graph of this signal detection of PER vs. SNR as shown in FIG. 8A illustrates that an example FPGA-emulated performance is close to the simulated performance, and is even better than a simulated performance of conventional methods. For FIG. 8B, it is shown that, in both cases, the performance corresponds to expectations.

Again, the sampling accelerator 500 may include a probabilistic self-test block 504, which may enable, for instance, efficient post-silicon design validation and in-field performance verifications. An example of a probabilistic self-test block 900 is shown FIG. 9, which may be identified with the probabilistic self-test block 504 as shown in FIG. 5. The probabilistic self-test block 900 may include additional, alternate, or less components than those shown in FIG. 9 by way of example and not limitation. For example, as shown in FIG. 9, the probabilistic self-test block 900 may include one or more processors, a microcontroller, logic elements, etc., that may be implemented as the control block 902. The control block 902 is configured to communicate with the control block 502 to instruct the control block 502 that a self-test is being performed, which may cause the control block 502 to make the appropriate connections and disconnections with respect to the sampling accelerator 500 as discussed above with respect to FIG. 5. For example, when in a self-test mode, the control block 502 may enable the reconnection of input/outputs as represented in FIG. 5 by the dashed lines to enable the probabilistic self-test block 900 to perform statistical verifications of the sampler block 510.

To do so, the control block 902 is also configured to communicate with one or more sensors such as power sensors 906 and/or temperature sensors 908. These sensors provide data with respect to operating and/or environmental conditions, which enable functional validation such as validation tests that monitor the performance of the device under a range of specific sets of operating and environmental conditions (e.g. different supply voltages and operating temperatures).

In an aspect, the control block 902 may communicate with the host CPU 404 or another appropriate processor via a suitable interface to receive test data, which may be stored in the data set memory 910 and used when self-test diagnostics are executed. For instance, the data set memory 910 may store a set of test data used by the sampling accelerator 500 to solve H or S matrices for which a solution is already known. The control block 902 may control the flow of the test data to the sampler block 510 via the gating block 911 and receive the calculated H or S matrix values from the sampler block 510 in response to the test data, which may be stored in the outputs memory 912. Thus, the probabilistic self-test block 900 emulates the standard mode of operation of the sampling accelerator 500, but uses a set of test data associated with a specific known solution.

Aspects include the performance checker block 904 analyzing the solution data stored in the outputs memory 912 by, for example, comparing the solutions data to the known solution in conjunction with various other metrics such as determining how long the sampler block 510 requires to converge to a solution, the number of iterations required to do so, determining if this is within specified operating parameters, determining if the distribution or entropy is as expected, etc. As additional examples, the performance checker block 904 may calculate a realized PDF, a response of the sampler block 510 to specific types of data (e.g. orthogonal data, as discussed in Section II below), etc.

The control block 902 is configured to enable the execution of any suitable number and/or type of different test cases to verify probabilistic performance and identify bugs. The control block 902 may, alone or in conjunction with the control block 502, execute different types of self-tests by selectively interconnecting one or more of the connections represented as the dashed lines as shown in FIG. 5. This may function, for example, to bypass or redirect data and/or to activate or deactivate subsections within the sampling accelerator 500 and/or to enable various types of different performance tests in various types of operating conditions. The control block 902 may communicate with the performance checker block 904 to derive any suitable number and/or type of performance metrics using the result of the tests, which may then be communicated to the host CPU 404 or other suitable component via a data interface implemented by the control block 902.

Section II — Techniques for reducing iterations of homography estimation

Again, the aspects described in Section I describe the functionality of the sampling accelerator 500, which may perform probabilistic sampling to solve for the H or S matrices, as discussed above. Although the aspects described herein may be applied for both wireless communications and homography applications, this Section focuses on aspects to further improve upon the sampling rate of the sampler block 510 when solving for the matrix H for homography applications.

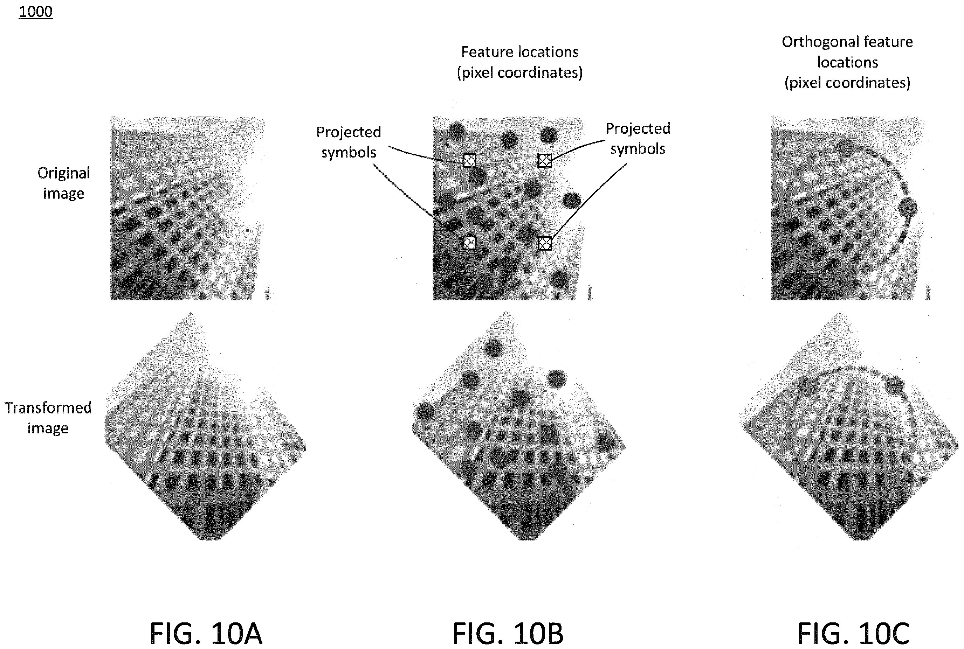

As discussed above, to solve for the homography matrix H, a preprocessing step may be first performed, for instance, via the host CPU 404 to identify features in an original image (corresponding to the S matrix) and transformed images (corresponding to the R matrix) to form a set of features. As discussed above, the control block 502 may receive this initial set of features as well as the identified location (e.g. pixel coordinates) in each of the original and transformed images. An example of the original and transformed images is shown in FIG. 10A, with FIG. 10B illustrating a set of identified features in each of the original and transformed image and their corresponding locations (e.g. pixel coordinates) within each of the images. FIG. 10C illustrates locations of features selected in a uniformly-sampled circle to reduce sampling iterations. As discussed herein, other patterns and geometric shapes may be implemented.

Thus, in the present aspects, it is recognized that if the location of the features constituting the original feature set matrix S are orthogonal to one another, the number of iterations required by the sampler block 510 is minimized, as described in further detail via the mathematical operations shown in the Appendix at Section A2. In other words, aspects include the control block 502 and/or pre-compute block 506 performing a check for matrix orthogonality by calculating the product of the S matrix by its transpose. If the product is the identity matrix, then the original feature set matrix S is orthogonal.

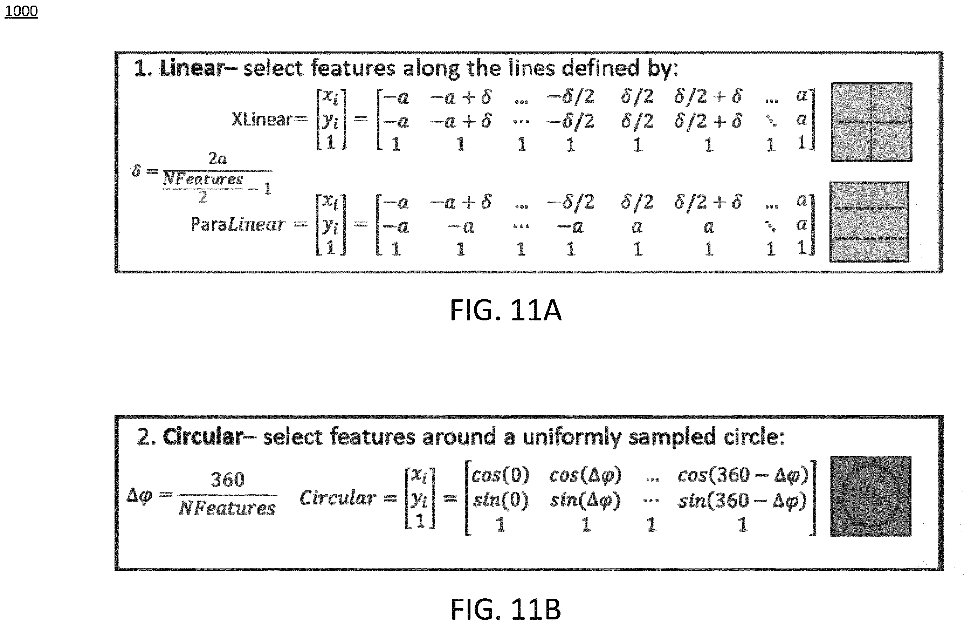

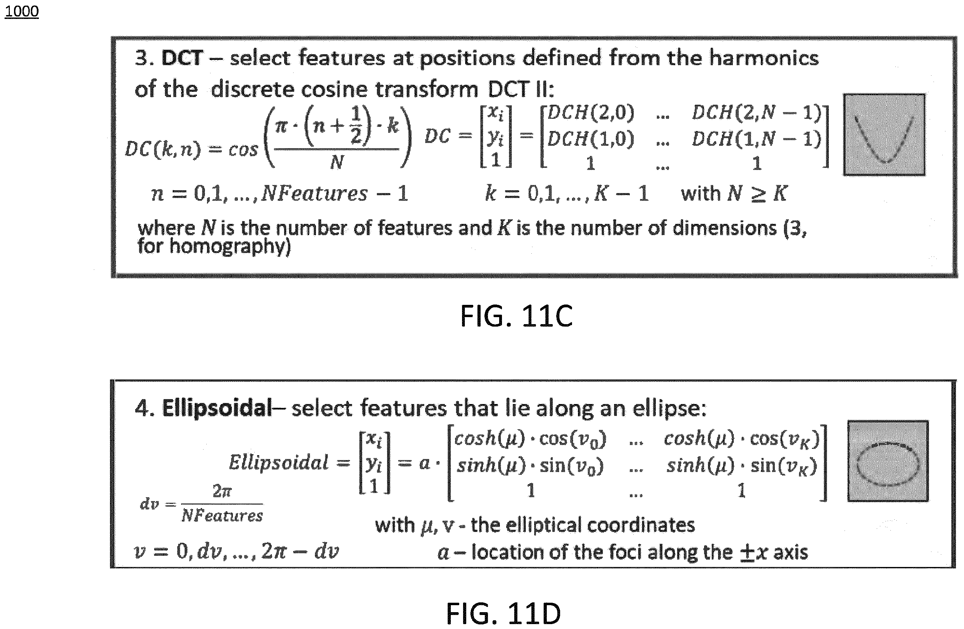

When this is the case, the original feature set matrix S, which includes this set of features, is said to be orthogonal. Thus, the aspects described in this Section are directed to the selection of features that lie along various patterns, which are shown and discussed in further detail with respect to FIGs. 11A-1 ID, to ensure the orthogonality of original feature set matrix S. In other words, the selection of features in the original image located along orthogonal patterns reduces the number of iterations performed by the sampler block 510 to converge to a solution for the homography matrix H. To do so, the aspects described in this Section include the host CPU 404 and/or the control block 502 selecting a subset of features from the features identified in the original image that are orthogonal to one another in accordance with one or more predefined rules that adhere to various patterns, such that the initial original feature set matrix S is orthogonal or at least substantially orthogonal (e.g. within some tolerance or predefined threshold such as 1%, 5%, 10%, etc.).

To do so, the predefined pattern rules are shown in further detail with reference to FIGs. 11A-11D. These pattern rules are provided by way of example, and may represent the more common patterns that may be used to attempt to identify orthogonal features as discussed in this Section by fitting a subset of identified features to one or more predetermined geometric shapes. However, the aspects are not limited to these examples, and any suitable number and/or type of patterns and/or rules may be implemented, which may be defined from the generic rule or condition that the initial S matrix should be orthogonal before being processed by the sampler block 510 to solve for the H matrix. As shown in FIGs. 11A-11D, the patterns define the number of features in the image that form an orthogonal set as NFeatures, such that a subset of those features may be selected using the example equations as shown in FIGs. 11A-11D, which define the ideal locations within an image in accordance with the respective patterns to facilitate the identification of the subset orthogonal features for the S matrix. The mathematical operations related to orthogonality are further shown in Section A2 of the Appendix, which describes the variables and solution techniques.

As an example, this process may include the control block 502 and/or the pre-compute block 506 selecting NFeatures from an original feature set matrix S associated with an image, and then verifying that the selected subset of features are located closely to the positions defined by the various equations as shown in FIGs. 11A-11D (e.g. within a predetermined threshold distance value). If not, then the control block 502 and/or the pre-compute block 506 may select a different subset of NFeatures and repeat this process until a subset of features is found that fits the particular pattern and equation that is used, at which point the subset of features may be identified as being orthogonal to one another, yielding the orthogonal matrix S that may be verified by a multiplication with its transpose as discussed herein. The number of NFeatures may be selected in any suitable manner, including known techniques, and may be based upon the particular pattern that is used and/or a particular application. For instance, the number of NFeatures may be selected to be within a particular region of an image, a specific radius from the center of the image, etc. In various aspects, the number of NFeatures may be any suitable value, although the minimum number used is generally 3 to ensure orthogonality is identified accurately.

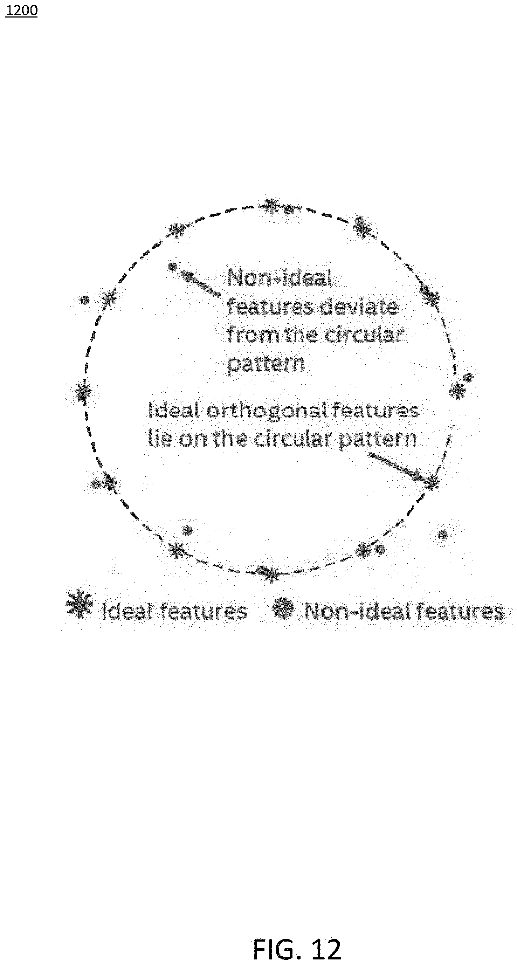

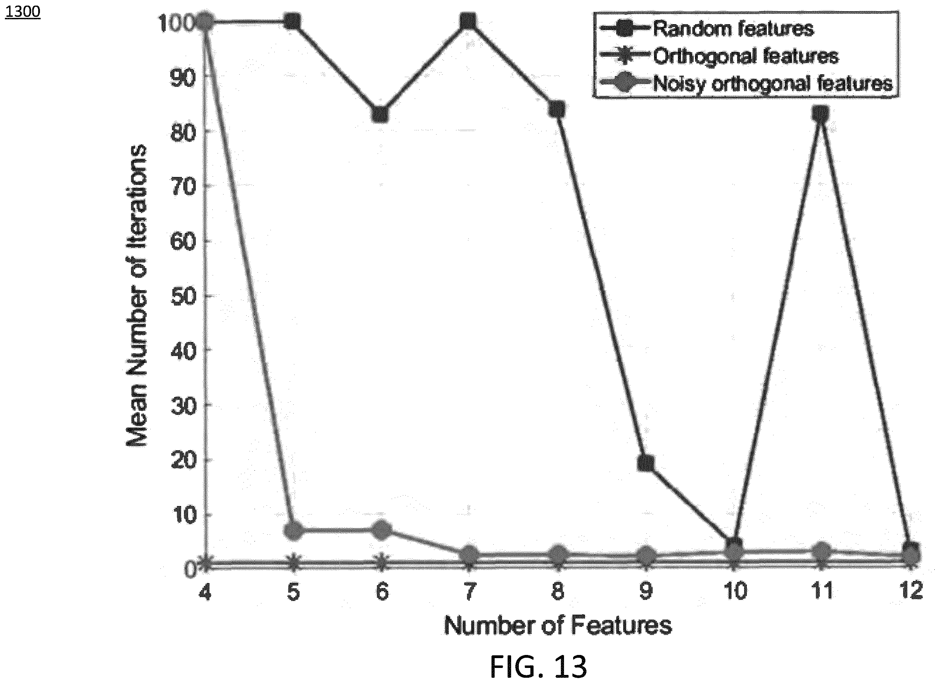

To illustrate the reduction in the number of iterations required by the sampler block 510, a simulation was conducted using features identified at locations that correspond to an ideal circular pattern and a non-ideal circular pattern (i.e. close to circular), as shown in FIG. 12, in addition to a set features selected at random locations (not shown). FIG. 13 illustrates the result of the simulation of an example test set of images used to establish the S and R matrices for the sampler block 510 to converge to a solution for the homography matrix H over a number of iterations. FIG. 13 illustrates the results of this simulation and shows the number of mean iterations required for different feature location patterns after 10,000 random homography matrix pre-definitions, which were estimated for 4 to 12 feature locations. Thus, with reference to FIGs. 10B and 10C, the random set of feature locations (13) may correspond to the features identified in FIG. 10B, whereas the subset of these features (8) is selected in FIG. 10C based upon their orthogonality in accordance with, in this example, the circular set of rules as defined in FIG. 11B. FIG. 13 thus demonstrates that the mean number of iterations, even for non-ideal orthogonal feature locations, is much less in general that the case of random feature locations. Furthermore, the ideal orthogonal feature set only requires a single iteration, the non-ideal set requires more iterations, and the random feature set requires the most number of iterations. This illustrates that even non-ideal orthogonal features reduce the number of sampling iterations.

Again, the image projector 406 may be configured to project information such as symbols, shapes, etc., which may then be present in the image associated with the feature set matrix S. For example, the original images as shown in FIGs. 10A-10C may include feature locations associated with these artificially created projected symbols, as shown in FIG. 10B. The arrangement of these projected symbols with respect to one another may be known, and in this example are laid out orthogonally with respect to one another when taking an image of the example scene. The presence of the projected symbols having a known predetermined orthogonal relationship to one another may significantly assist in the identification of other orthogonal features, as these projected symbols provide a reference from which orthogonality may be determined. The use of projected symbols in this manner may be particularly useful, for instance, in cooperation scenarios in which near-by vehicles share images with one another.

Section III — Techniques for feature extraction from event-based cameras

The aspects described in this Section are directed to feature extraction with respect to event cameras. The aspects described in this Section may be combined with one or more of the aspects as described herein with respect to Sections I and II, or may be implemented as separate aspects. As an example, the aspects described in this section may form part of the pre-processing operations that generate the original feature set matrix S and transformed feature set matrix R for the control block 502. That is, the aspects described in this Section may facilitate the identification and extraction of features from image data provided by event cameras, and function in particular with respect to the extraction of corner features in this regard, which has traditionally posed difficulty.

Thus, the aspects described herein may be implemented via any suitable component, such as one or more processors, components, etc., of a device (e.g., ADAS or AD vehicle) that uses event cameras to capture data associated with a particular environment, which may include a road scene for example. As an example, the aspects described in this Section may be implemented via one or more components of the system architecture 400 as discussed above with reference to FIG. 4. This may include, for instance, the host CPU 404, the neural network 408, etc. In an aspect, the event camera data discussed throughout this section may be provided by the camera 402 as shown in FIG. 4, in aspects in which the camera 402 functions as an event camera, or other event cameras not shown in the Figures for purposes of brevity.

To provide some additional detail with respect to their operation, event cameras utilize imaging sensors that detect local changes in brightness, and are particularly useful for machine vision applications as they advantageously have a temporal resolution on the order or microseconds, a high dynamic range (e.g., 120dB or greater), and do not suffer under/overexposure or motion blur. To do so, each pixel inside an event camera typically operates independently and asynchronously with the other pixels. In other words, each pixel generates sensor data (otherwise referred to herein as "event data") that indicates changes in brightness as it occurs, and otherwise remains silent (e.g., by not outputting sensor data or outputting sensor data that does not indicate an event). Thus, each pixel of an event camera reports a series of timewise events that, when sensed or otherwise indicated in the sensor data output by the event camera, indicates a deviation of a level of brightness detected at that pixel from a nominal value at a particular time.

Thus, event-based cameras can advantageously detect the intensity change in a particular scene with frequencies of approximately 1KHz or greater, enabling the detection and correction of the relative location of vehicles in a faster manner. However, the use of event-based camera data presents additional challenges with respect to feature extraction versus traditional vision-based camera systems, as traditional feature extraction techniques that are generally used for vision-based cameras cannot be applied to event-based cameras if the high-frequency data acquisition is to be exploited. Hence, the aspects described herein address this issue using a corner feature detection method that saves computing the entire event-image, and instead focuses on a set of pixels within the event-image that triggered an event (e.g. non-zero pixels), considering the time dependency of the triggered events.

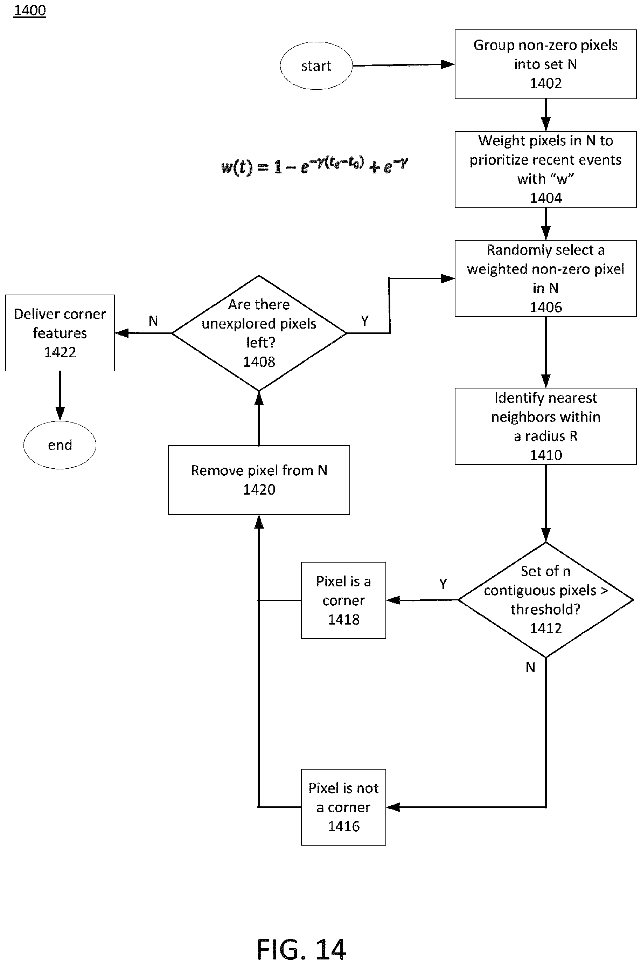

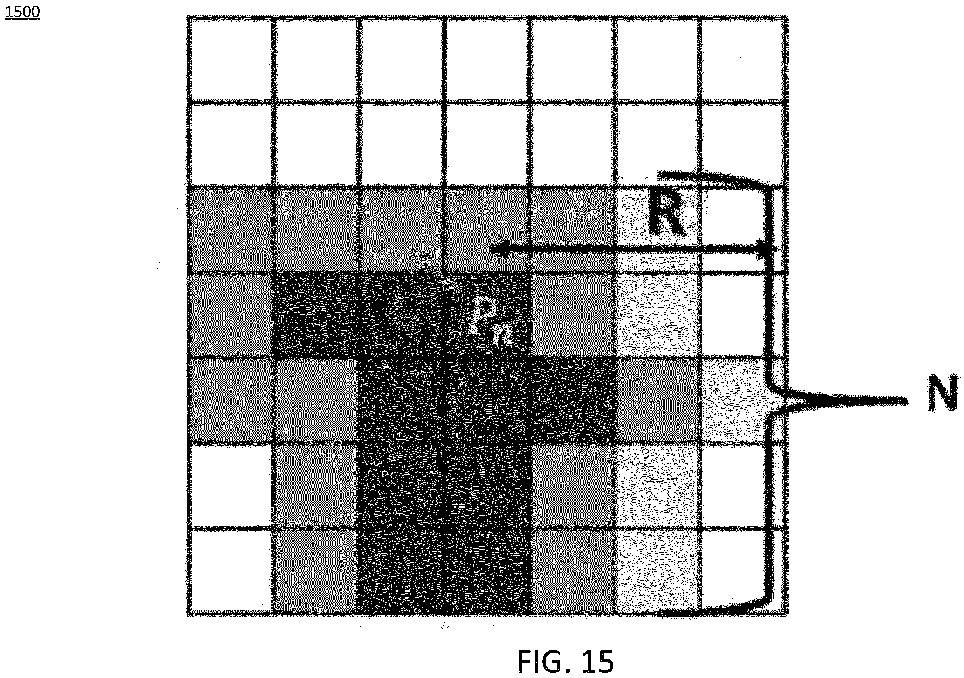

An example process for executing the corner-feature extraction with respect to event-based cameras is shown in FIG. 14 as process 1400. The process 1400 is described with respect to the event-based image 1500 as shown in FIG. 15, which illustrates a portion of an event-based image having a grouping of non-zero pixels N. Thus, the grouping of non-zero pixels N may constitute a cluster of non-zero pixels recorded from an event-based camera and include events recorded over a successive set of time windows depending upon the particular implementation of the event-based camera and it specifications. In contrast to the non-zero pixels as shown in FIG. 15, the event image may include zero pixels that are depicted as being a solid white color.

Thus, each respective pixel as shown in FIG. 15 may represent a number of detected events within a set of time windows and may represent a smaller region of an event image. Each pixel independently detects events within this number of time windows, and thus each pixel has a varying shade of darkness representing a particular value, with the darker the color meaning the greater the number of events detected by that pixel over the duration of the time windows. The number of shades used may thus reflect the granularity of the number of different accumulated events that may be detected by each pixel, with zero representing the white color and the maximum number of events representing the darkest color. The number of counted events during the time windows may be normalized to provide intensity gradient values based upon a predetermined range of values. This range of values may be any suitable range depending upon the desired granularity and accuracy of a particular application. For example, the intensity value range may be from 0 (no events or a minimum number of events occurring) to 255 (the maximum number of events occurring) in accordance with an 8-bit encoding system.

In an aspect, the portion of the event image that is analyzed and associated with a triggered event is shown by way of example in FIG. 15, and includes a grouping of non-zero pixels N, which may be comprised of groupings of contiguous pixels of a number n (less than the total number of pixels N in the region) having the same intensity values or within a predetermined threshold of one another. As shown in FIG. 15, $t_r$ denotes a cumulative threshold between pixels over a single time window or several time windows. In other words, neighboring pixels may differ from one another by having a variation in an accumulated value for a number of events occurring within one or more time windows that is represented by the threshold $t_r$. Pixels may be separated from one another such that neighboring pixels are considered adjacent pixels. With this in mind, the process 1400 may begin by selecting (block 1402) a group of non-zero pixels into a set N, as shown in the example event image in FIG. 15, for example, which again may be associated with a region of an event-image over which various events have been detected over a set of time windows by each respective pixel within the grouping of the set of N pixels.

Next, the process 1400 includes weighting (block 1404) each of the pixels in the set of N pixels to prioritize recent events over less recent events. In other words, the more recent events (i.e. more recent time windows) are prioritized over events that occurred less recently (i.e. events detected within time windows occurring less recently) with respect to the sampling windows associated with the event image. This may include, for example, using a weighting equation as shown below as follows:

$$w(t) = 1 - e^{-\gamma(t_e - t_0)} + e^{-\gamma},$$

where $t_0$ represents the time at the beginning of a time window, $t_e$ represents a time when the last event (most recent event) occurred, and $\gamma$ represents a decay factor to prioritize recent events. The decay factor $\gamma$ may be selected as any suitable value depending upon the specification of the event camera providing the event image data, the speed of the event camera, the number of time windows, the application, etc. Of course, the weighting equation above is but one example of a weighting equation that may be utilized for this purpose, and the aspects described herein may implement any suitable number and/or type of weighing equation depending upon the desired result, application, etc.

Once each of the pixels in the grouping of the set of N pixels is weighted in this manner, the process 1400 further includes randomly selecting (block 1406) a weighted non-zero pixel in the grouping, such as the pixel $P_n$, for instance, as shown in FIG. 15. Next, the nearest neighbors are identified (block 1410) within a predetermined radius R, which may represent a predetermined number of pixels such as 3, for example, as shown in the example in FIG. 15. Then, using the predetermined radius R as a constraint on the searching process, the process 1400 determines (block 1412) whether the number of the set of continuous pixels within the predetermined radius value R from the randomly selected pixel are greater than a predetermined threshold number. This may include, for instance, determining the number of pixels that are contiguous with the randomly selected pixel within the radius R, i.e. having the same value or are within a threshold value of that of the randomly-selected pixel. In the example shown in FIG. 15, the number of contiguous pixels including the pixel $P_n$ is ten. If the threshold at block 1412 is nine or less in this example, then the result of this decision would be yes, and the process 1400 would continue to block 1418 in which the pixel is identified as a corner pixel. Otherwise, the process 1400 continues to block 1416, in which case the pixel is identified as a non-corner pixel.

In any event, upon being classified as either a corner or non-corner pixel, the pixel is then removed (block 1420) from the pixels in the set of N pixels. The process 1400 then determines (block 1408) if additional pixels are left to identify as either corner or non-corner pixels. If so, then the process 1400 continues to once again randomly select (block 1406) the next pixel in the set of N pixels, determine whether this pixel is a corner or non-corner pixel, and repeats this process for each pixel in the set of N pixels until no pixels are remaining (block 1408, 'N'). Once each pixel in the set of N pixels is identified as a corner pixel or a non-corner pixel, the process 1400 includes delivering (block 1422) the corner features, which may include identifying each pixel classified as a corner pixel. This may include, for instance, storing and/or transmitting the pixels as corner features, which may include transmission of the corner features as part of the data received by the control block 502 to begin the probabilistic sampling process to solve for the H or S matrix, as discussed above in Sections I and II.

Examples

The following examples pertain to further aspects.

Example 1 is a device, comprising: an input interface configured to: receive a first data set associated with an original image and including identified features associated with the original image; calculate a second data set associated with an initial homography estimation applied to the original image to generate a transformed image; and receive a third data set associated with the transformed image and including identified features in the transformed image; and processing circuitry configured to iteratively generate, based upon the first data set and the third data set, samples over a successive number of iterations until matrix values associated with the second data set reach a statistically expected set of values to calculate a homography estimation solution that, when applied to the first data set, defines how each pixel coordinate within the original image is transformed to create each pixel coordinate in the transformed image.

In Example 2, the subject matter of Example 1, wherein the processing circuitry is configured to iteratively generate the samples in accordance with a Markov Chain Monte Carlo sampler to calculate the homography estimation solution.

In Example 3, the subject matter of any combination of Examples 1-2, wherein the processing circuitry is further configured to perform a self-test by providing, as the first data set, the second data set, and the third data set, test data associated with a predetermined solution for the homography estimation solution, and to compare the result of the calculated homography estimation solution to the predetermined solution.

In Example 4, the subject matter of any combination of Examples 1-3, wherein the processing circuitry is configured to compare the result of the calculated homography estimation solution to the predetermined solution to determine the number of iterations required by the processing circuitry to converge to the calculated homography estimation solution.

In Example 5, the subject matter of any combination of Examples 1-4, wherein the processing circuitry is configured to calculate the homography estimation solution as at least one of a continuous solution or a discrete solution, and wherein the processing circuitry is further configured to, when the discrete solution is calculated, to utilize a demapper to calculate the homography estimation solution.

In Example 6, the subject matter of any combination of Examples 1-5, wherein the processing circuitry is further configured to select, from among the identified features included in the first data set associated with the original image, a subset of features that are orthogonal to one another as an input to start the process of the processing circuitry iteratively generating samples to calculate the homography estimation solution.

In Example 7, the subject matter of any combination of Examples 1-6, wherein the processing circuitry is further configured to select the subset of features that are orthogonal to one another in accordance with one or more rules that are based upon fitting the subset of features to one or more predetermined geometric shapes.

In Example 8, the subject matter of any combination of Examples 1-7, wherein the original image includes a set of symbols that are projected onto a scene associated with the original image, and wherein the projected symbols have a predetermined orthogonal relationship with respect to one another.

Example 9 is a device, comprising: an input interface configured to: calculate a first data set associated with at least a portion of an estimated original transmitted signal, the first data set being represented as an original signal matrix; receive a second data set associated with a wireless channel matrix applied to the original transmitted signal to generate received signal data; and receive a third data set associated with the received signal data, the third data set being represented as a received signal matrix; and processing circuitry configured to iteratively generate, based upon the second data set and the third data set, samples over a successive number of iterations until matrix values associated with the original signal matrix reach a statistically expected set of values to calculate a solution that enables recovery of the original transmitted signal.

In Example 10, the subject matter of Example 9, wherein the processing circuitry is configured to iteratively generate the samples in accordance with a Markov Chain Monte Carlo sampler to calculate the solution that enables recovery of the original transmitted signal.

In Example 11, the subject matter of any combination of Examples 9-10, wherein the processing circuitry is further configured to perform a self-test by providing, as the first data set, the second data set, and the third data set, test data associated with a predetermined solution for the solution that enables recovery of the original transmitted signal, and to compare the result of the calculated solution to the predetermined solution.

In Example 12, the subject matter of any combination of Examples 9-11, wherein the processing circuitry is configured to compare the result of the calculated solution to the predetermined solution to determine the number of iterations required by the processing circuitry to converge to the calculated solution.

In Example 13, the subject matter of any combination of Examples 9-12, wherein the processing circuitry is configured to calculate the solution as at least one of a continuous solution or a discrete solution, and wherein the processing circuitry is further configured to, when the discrete solution is calculated, to utilize a demapper to calculate the solution.

In Example 14, the subject matter of any combination of Examples 9-13, wherein the processing circuitry is configured to calculate the solution as a mean of the generated samples upon the matrix values associated with the original signal matrix reaching the statistically expected set of values.

Example 15 is a device, comprising: an interface configured to receive event image data from an event camera representing an event image, the event image comprising a set of pixels, with each pixel from among the set of pixels independently recording event data associated with events over a number of successive time windows; and processing circuitry configured to: identify a group of pixels within the event image; apply a weighting to each pixel within the group of pixels, the weighting being applied such that pixels having more recent events during the number of successive time windows are assigned a higher weighting than pixels having less recent events during the number of successive time windows; and identify, for among the each one of the weighted pixels in the group of pixels, which pixels correspond to a corner feature or a non-corner feature.

In Example 16, the subject matter of Example 15, wherein the processing circuitry is configured to apply the weighing to each pixel within the group of pixels in accordance with the following expression: $w(t) = 1 - e^{-\gamma(te-t0)} + e^{-\gamma}$, where $t_0$ represents the time at the beginning of a time window, $t_e$ represents a time when the most recent event occurred, and $\gamma$ represents a decay factor.

In Example 17, the subject matter of any combination of Examples 15-16, wherein each pixel within the group of pixels is identified with at least one event.

In Example 18, the subject matter of any combination of Examples 15-17, wherein the processing circuitry is further configured to randomly select each one of the weighted pixels in the group of pixels and to determine, for each randomly selected pixel, whether the pixel is associated with a corner feature.

In Example 19, the subject matter of any combination of Examples 15-18, wherein the processing circuitry is further configured to identify, for each randomly selected weighted pixel in the group of pixels, the nearest adjacent pixels within a predefined radius, and to determine whether the pixel is associated with a corner feature based upon the number of adjacent pixels.

In Example 20, the subject matter of any combination of Examples 15-19, wherein the processing circuitry is further configured to identify, for each randomly selected weighted pixel in the group of pixels, a pixel as being associated with a corner feature when a number of the nearest adjacent pixels within the predefined radius that are contiguous with one another exceed a threshold contiguous pixel number.

Example 21 is a device, comprising: an input means for: receiving a first data set associated with an original image and including identified features associated with the original image; calculate a second data set associated with an initial homography estimation applied to the original image to generate a transformed image; and receiving a third data set associated with the transformed image and including identified features in the transformed image; and processing means for iteratively generating, based upon the first data set and the third data set, samples over a successive number of iterations until matrix values associated with the second data set reach a statistically expected set of values to calculate a homography estimation solution that, when applied to the first data set, defines how each pixel coordinate within the original image is transformed to create each pixel coordinate in the transformed image.

In Example 22, the subject matter of Example 21, wherein the processing means iteratively generates the samples in accordance with a Markov Chain Monte Carlo sampler to calculate the homography estimation solution.

In Example 23, the subject matter of any combination of Examples 21-22, wherein the processing means performs a self-test by providing, as the first data set, the second data set, and the third data set, test data associated with a predetermined solution for the homography estimation solution, and to compare the result of the calculated homography estimation solution to the predetermined solution.

In Example 24, the subject matter of any combination of Examples 21-23, wherein the processing means compares the result of the calculated homography estimation solution to the predetermined solution to determine the number of iterations required by the processing means to converge to the calculated homography estimation solution.

In Example 25, the subject matter of any combination of Examples 21-24, wherein the processing means calculates the homography estimation solution as at least one of a continuous solution or a discrete solution, and wherein the processing means further, when the discrete solution is calculated, utilizes a demapper to calculate the homography estimation solution.

In Example 26, the subject matter of any combination of Examples 21-25, wherein the processing means further selects, from among the identified features included in the first data set associated with the original image, a subset of features that are orthogonal to one another as an input to start the process of the processing circuitry iteratively generating samples to calculate the homography estimation solution.

In Example 27, the subject matter of any combination of Examples 21-26, wherein the processing means further selects the subset of features that are orthogonal to one another in accordance with one or more rules that are based upon fitting the subset of features to one or more predetermined geometric shapes.

In Example 28, the subject matter of any combination of Examples 21-27, wherein the original image includes a set of symbols that are projected onto a scene associated with the original image, and wherein the projected symbols have a predetermined orthogonal relationship with respect to one another.

Example 29 is a device, comprising: an input means for: calculating a first data set associated with at least a portion of an estimated original transmitted signal, the first data set being represented as an original signal matrix; receiving a second data set associated with a wireless channel matrix applied to the original transmitted signal to generate received signal data; and receiving a third data set associated with the received signal data, the third data set being represented as a received signal matrix; and processing means for iteratively generating, based upon the second data set and the third data set, samples over a successive number of iterations until matrix values associated with the original signal matrix reach a statistically expected set of values to calculate a solution that enables recovery of the original transmitted signal.

In Example 30, the subject matter of Example 29, wherein the processing means iteratively generates the samples in accordance with a Markov Chain Monte Carlo sampler to calculate the solution that enables recovery of the original transmitted signal.

In Example 31, the subject matter of any combination of Examples 29-30, wherein the processing means further performs a self-test by providing, as the first data set, the second data set, and the third data set, test data associated with a predetermined solution for the solution that enables recovery of the original transmitted signal, and to compare the result of the calculated solution to the predetermined solution.

In Example 32, the subject matter of any combination of Examples 29-31, wherein the processing means compares the result of the calculated solution to the predetermined solution to determine the number of iterations required by the processing circuitry to converge to the calculated solution.

In Example 33, the subject matter of any combination of Examples 29-32, wherein the processing means calculates the solution as at least one of a continuous solution or a discrete solution, and wherein the processing means further, when the discrete solution is calculated, utilizes a demapper to calculate the solution.

In Example 34, the subject matter of any combination of Examples 29-33, wherein the processing means calculates the solution as a mean of the generated samples upon the matrix values associated with the original signal matrix reaching the statistically expected set of values.

Example 35 is a device, comprising: an interface means for receiving event image data from an event camera representing an event image, the event image comprising a set of pixels, with each pixel from among the set of pixels independently recording event data associated with events over a number of successive time windows; and processing means for: identifying a group of pixels within the event image; applying a weighting to each pixel within the group of pixels, the weighting being applied such that pixels having more recent events during the number of successive time windows are assigned a higher weighting than pixels having less recent events during the number of successive time windows; and identifying, for among the each one of the weighted pixels in the group of pixels, which pixels correspond to a corner feature or a non-corner feature.

In Example 36, the subject matter of Example 35, wherein the processing means applies the weighing to each pixel within the group of pixels in accordance with the following expression: $w(t) = 1 - e^{-\gamma(te-t0)} + e^{-\gamma}$, where $t_0$ represents the time at the beginning of a time window, $t_e$ represents a time when the most recent event occurred, and $\gamma$ represents a decay factor.

In Example 37, the subject matter of any combination of Examples 35-36, wherein each pixel within the group of pixels is identified with at least one event.

In Example 38, the subject matter of any combination of Examples 35-37, wherein the processing means further randomly selects each one of the weighted pixels in the group of pixels and to determine, for each randomly selected pixel, whether the pixel is associated with a corner feature.

In Example 39, the subject matter of any combination of Examples 35-38, wherein the processing means further identifies, for each randomly selected weighted pixel in the group of pixels, the nearest adjacent pixels within a predefined radius, and determines whether the pixel is associated with a corner feature based upon the number of adjacent pixels.

In Example 40, the subject matter of any combination of Examples 35-39, wherein the processing means further identifies, for each randomly selected weighted pixel in the group of pixels, a pixel as being associated with a corner feature when a number of the nearest adjacent pixels within the predefined radius that are contiguous with one another exceed a threshold contiguous pixel number.

An apparatus as shown and described.

A method as shown and described.

Conclusion

The aforementioned description of the specific aspects will so fully reveal the general nature of the disclosure that others can, by applying knowledge within the skill of the art, readily modify and/or adapt for various applications such specific aspects, without undue experimentation, and without departing from the general concept of the present disclosure. Therefore, such adaptations and modifications are intended to be within the meaning and range of equivalents of the disclosed aspects, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

References in the specification to "one aspect," "an aspect," "an exemplary aspect," etc., indicate that the aspect described may include a particular feature, structure, or characteristic, but every aspect may not necessarily include the particular feature, structure, or characteristic. Moreover, such phrases are not necessarily referring to the same aspect. Further, when a particular feature, structure, or characteristic is described in connection with an aspect, it is submitted that it is within the knowledge of one skilled in the art to affect such feature, structure, or characteristic in connection with other aspects whether or not explicitly described.

The exemplary aspects described herein are provided for illustrative purposes, and are not limiting. Other exemplary aspects are possible, and modifications may be made to the exemplary aspects. Therefore, the specification is not meant to limit the disclosure. Rather, the scope of the disclosure is defined only in accordance with the following claims and their equivalents.

Aspects may be implemented in hardware (e.g., circuits), firmware, software, or any combination thereof. Aspects may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices;

electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact results from computing devices, processors, controllers, or other devices executing the firmware, software, routines, instructions, etc. Further, any of the implementation variations may be carried out by a general purpose computer.

For the purposes of this discussion, the term "processing circuitry" or "processor circuitry" shall be understood to be circuit(s), processor(s), logic, or a combination thereof. For example, a circuit can include an analog circuit, a digital circuit, state machine logic, other structural electronic hardware, or a combination thereof. A processor can include a microprocessor, a digital signal processor (DSP), or other hardware processor. The processor can be "hard-coded" with instructions to perform corresponding function(s) according to aspects described herein. Alternatively, the processor can access an internal and/or external memory to retrieve instructions stored in the memory, which when executed by the processor, perform the corresponding function(s) associated with the processor, and/or one or more functions and/or operations related to the operation of a component having the processor included therein.

In one or more of the exemplary aspects described herein, processing circuitry can include memory that stores data and/or instructions. The memory can be any well-known volatile and/or non-volatile memory, including, for example, read-only memory (ROM), random access memory (RAM), flash memory, a magnetic storage media, an optical disc, erasable programmable read only memory (EPROM), and programmable read only memory (PROM). The memory can be non-removable, removable, or a combination of both.

**Claims**

1. A device, comprising:

    an input means for:

        receiving a first data set associated with an original image and including identified features associated with the original image; calculating a second data set associated with an initial homography estimation applied to the original image to generate a transformed image; and receiving a third data set associated with the transformed image and including identified features in the transformed image; and

    processing means for iteratively generating, based upon the first data set and the third data set, samples over a successive number of iterations until matrix values associated with the second data set reach a statistically expected set of values to calculate a homography estimation solution that, when applied to the first data set, defines how each pixel coordinate within the original image is transformed to create each pixel coordinate in the transformed image.

2. The device of claim 1, wherein the processing means iteratively generates the samples in accordance with a Markov Chain Monte Carlo sampler to calculate the homography estimation solution.

3. The device of one of the previous claims, wherein the processing means performs a self-test by providing, as the first data set, the second data set, and the third data set, test data associated with a predetermined solution for the homography estimation solution, and to compare the result of the calculated homography estimation solution to the predetermined solution.

4. The device of one of the previous claims, wherein the processing means compares the result of the calculated homography estimation solution to the predetermined solution to determine the number of iterations required by the processing means to converge to the calculated homography estimation solution.

5. The device of one of the previous claims, wherein the processing means calculates the homography estimation solution as at least one of a continuous solution or a discrete solution, and wherein the processing means further, when the discrete solution is calculated, utilizes a demapper to calculate the homography estimation solution.

6. The device of one of the previous claims, wherein the processing means further selects, from among the identified features included in the first data set associated with the original image, a subset of features that are orthogonal to one another as an input to start the process of the processing circuitry iteratively generating samples to calculate the homography estimation solution.

7. The device of one of the previous claims, wherein the processing means further selects the subset of features that are orthogonal to one another in accordance with one or more rules that are based upon fitting the subset of features to one or more predetermined geometric shapes.

8. The device of one of the previous claims, wherein the original image includes a set of symbols that are projected onto a scene associated with the original image, and wherein the projected symbols have a predetermined orthogonal relationship with respect to one another.

9. A device, comprising:

an input means for:

calculating a first data set associated with at least a portion of an estimated original transmitted signal, the first data set being represented as an original signal matrix; and

receiving a second data set associated with a wireless channel matrix applied to the original transmitted signal to generate received signal data; and receiving a third data set associated with the received signal data, the third data set being represented as a received signal matrix; and

processing means for iteratively generating, based upon the second data set and the third data set, samples over a successive number of iterations until matrix values associated with the original signal matrix reach a statistically expected set of values to calculate a solution that enables recovery of the original transmitted signal.

10. The device of claim 9, wherein the processing means iteratively generates the samples in accordance with a Markov Chain Monte Carlo sampler to calculate the solution that enables recovery of the original transmitted signal.

11. The device of claim 9 or 10, wherein the processing means further performs a self-test by providing, as the first data set, the second data set, and the third data set, test data associated with a predetermined solution for the solution that enables recovery of the original transmitted signal, and to compare the result of the calculated solution to the predetermined solution.

12. The device of claim 9, 10 or 11, wherein the processing means compares the result of the calculated solution to the predetermined solution to determine the number of iterations required by the processing circuitry to converge to the calculated solution.

13. The device of claim 9, 10, 11 or 12, wherein the processing means calculates the solution as at least one of a continuous solution or a discrete solution, and wherein the processing means further, when the discrete solution is calculated, utilizes a demapper to calculate the solution.

14. A device, comprising:

an interface means for receiving event image data from an event camera representing an event image, the event image comprising a set of pixels, with each pixel from among the set of pixels independently recording event data associated with events over a number of successive time windows; and
processing means for:

identifying a group of pixels within the event image;
applying a weighting to each pixel within the group of pixels, the weighting being applied such that pixels having more recent events during the number of successive time windows are assigned a higher weighting than pixels having less recent events during the number of successive time windows; and
identifying, for among the each one of the weighted pixels in the group of pixels, which pixels correspond to a corner feature or a non-corner feature.

15. The device of claim 14, wherein the processing means applies the weighing to each pixel within the group of pixels in accordance with the following expression: $w(t) = 1 - e^{-\gamma(t_e-t0)} + e^{-\gamma}$, where $t_0$ represents the time at the beginning of a time window, $t_e$ represents a time when the most recent event occurred, and $\gamma$ represents a decay factor.

FIG. 1

200

FIG. 2

EP 4 030 383 A1

300

FIG. 3

FIG. 4

EP 4 030 383 A1

FIG. 5

600

```
Receive R, H, S
602
```

```
Get flag for
"SolveForCase"
604
```

```
Flag = 'H'?
606
```
N →

Y ↓

```
SolveFor = H
Original = S
608
```

```
SolveFor = S^Transp
Original = H^Transp
610
```

```
Compute initial estimate
SolveFor^o
612
```

```
k=1
614
```

```
Error ok?
k<Maxiters?
616
```
N →

Y ↓

```
Compute k-th sample
SolveFor^k
618
```

```
'SolveFor'
discrete?
620
```
N ←

Y ↓

FIG. 6

```
Demap samples
622
```

```
Deliver 'SolveFor'
samples and mean
624
```

end

$$\alpha_{:,t}^{k} = R \cdot \frac{S_{t,:}^{*}}{\|S_{t,:}\|^2} \; - \; H_{-\{:,t\}}^{k} \cdot \left( S \cdot \frac{S_{t,:}^{*}}{\|S_{t,:}\|^2} \right) \quad \text{(A1.4a)} \qquad\qquad \beta_t^2 = \frac{\sigma^2}{\|S_{t,:}\|^2} \quad \text{(A1.4b)}$$

$$h_{r,t}^{k} = Re\{\alpha_{:,t}^{k}\} + \beta_{r,t} \cdot I + i(Im\{\alpha_{r,t}\} + \beta_{r,t} \cdot Q) \qquad \text{(A1.5)}$$

FIG. 7

EP 4 030 383 A1

FIG. 8A

800

800

FIG. 8B

EP 4 030 383 A1

900

To/From
control block
502

Power
Sensors
906

Temperature
Sensors
908

From-to
test host

Control
902

Data set
memory
910

Gating
block 911

To Sampler
block 510

Performance Checker
904

Outputs Memory
912

From Sampler
block 510

EP 4 030 383 A1

FIG. 9

Original image

Transformed image

Feature locations (pixel coordinates)

Projected symbols

Projected symbols

Orthogonal feature locations (pixel coordinates)

FIG. 10A

FIG. 10B

FIG. 10C

1. **Linear**– select features along the lines defined by:

$$\text{XLinear} = \begin{bmatrix} x_i \\ y_i \\ 1 \end{bmatrix} = \begin{bmatrix} -a & -a+\delta & \dots & -\delta/2 & \delta/2 & \delta/2+\delta & \dots & a \\ -a & -a+\delta & \cdots & -\delta/2 & \delta/2 & \delta/2+\delta & \ddots & a \\ 1 & 1 & 1 & 1 & 1 & 1 & 1 & 1 \end{bmatrix}$$

$$\delta = \frac{2a}{\frac{NFeatures}{2} - 1}$$

$$\text{ParaLinear} = \begin{bmatrix} x_i \\ y_i \\ 1 \end{bmatrix} = \begin{bmatrix} -a & -a+\delta & \dots & -\delta/2 & \delta/2 & \delta/2+\delta & \dots & a \\ -a & -a & \cdots & -a & a & a & \ddots & a \\ 1 & 1 & 1 & 1 & 1 & 1 & 1 & 1 \end{bmatrix}$$

FIG. 11A

2. **Circular**– select features around a uniformly sampled circle:

$$\Delta\varphi = \frac{360}{NFeatures} \qquad \text{Circular} = \begin{bmatrix} x_i \\ y_i \\ 1 \end{bmatrix} = \begin{bmatrix} \cos(0) & \cos(\Delta\varphi) & \dots & \cos(360-\Delta\varphi) \\ \sin(0) & \sin(\Delta\varphi) & \cdots & \sin(360-\Delta\varphi) \\ 1 & 1 & 1 & 1 \end{bmatrix}$$

FIG. 11B

3. **DCT** – select features at positions defined from the harmonics of the  discrete cosine transform DCT II:

$$DC(k,n) = cos\left(\frac{\pi \cdot \left(n + \frac{1}{2}\right) \cdot k}{N}\right) \quad DC = \begin{bmatrix} x_i \\ y_i \\ 1 \end{bmatrix} = \begin{bmatrix} DCH(2,0) & \dots & DCH(2,N-1) \\ DCH(1,0) & \dots & DCH(1,N-1) \\ 1 & \dots & 1 \end{bmatrix}$$

$$n = 0,1,\dots,NFeatures - 1 \qquad k = 0,1,\dots,K - 1 \quad \text{with } N \geq K$$

where $N$ is the number of features and $K$ is the number of dimensions (3, for homography)

## FIG. 11C

4. **Ellipsoidal**– select features that lie along an ellipse:

$$Ellipsoidal = \begin{bmatrix} x_i \\ y_i \\ 1 \end{bmatrix} = a \cdot \begin{bmatrix} cosh(\mu) \cdot cos(v_0) & \dots & cosh(\mu) \cdot cos(v_K) \\ sinh(\mu) \cdot sin(v_0) & \dots & sinh(\mu) \cdot sin(v_K) \\ 1 & \dots & 1 \end{bmatrix}$$

$$dv = \frac{2\pi}{NFeatures}$$

with $\mu, v$ - the elliptical coordinates

$$v = 0, dv, \dots, 2\pi - dv \qquad a - \text{location of the foci along the } \pm x \text{ axis}$$

## FIG. 11D

1200

FIG. 12

FIG. 13

EP 4 030 383 A1

1400

```
                                              ┌─────────────────────┐
                                              │  Group non-zero     │
                                              │  pixels into set N  │
               ┌───────┐                      │       1402          │
               │ start │────────────────────▶ └─────────────────────┘
               └───────┘                                 │
                                                         ▼
                                              ┌─────────────────────┐
                                              │  Weight pixels in N │
                                              │ to prioritize recent│
                                              │  events with "w"    │
                                              │       1404          │
                                              └─────────────────────┘
                                                         │
                                                         ▼
                                              ┌─────────────────────┐
                          ◇                   │  Randomly select a  │
 ┌──────────┐      ╱  Are there  ╲            │ weighted non-zero   │
 │ Deliver  │   N ╱   unexplored  ╲  Y        │    pixel in N       │
 │ corner   │◀─── ╲   pixels      ╱──────────▶│       1406          │
 │ features │      ╲   left?     ╱            └─────────────────────┘
 │  1422    │       ╲   1408    ╱                       │
 └──────────┘          ◇                                ▼
      │                △                      ┌─────────────────────┐
      ▼                │                      │  Identify nearest   │
  ┌───────┐            │                      │  neighbors within   │
  │  end  │            │                      │   a radius R        │
  └───────┘     ┌─────────────────┐          │       1410          │
                │ Remove pixel    │          └─────────────────────┘
                │ from N          │                     │
                │    1420         │                     ▼
                └─────────────────┘                    ◇
                        △              ┌────────┐   ╱ Set of n ╲
                        │           Y  │ Pixel  │  ╱ contiguous ╲
                        │   ┌──────────│ is a   │◀─╲ pixels >   ╱
                        │   │          │ corner │   ╲ threshold?╱
                        │   │          │ 1418   │    ╲  1412   ╱
                        │   │          └────────┘       ◇
                        │   │                           │ N
                        │   │          ┌────────┐       │
                        │   │          │ Pixel  │       │
                        │   └──────────│ is not │       │
                        └──────────────│ a corner│◀─────┘
                                       │ 1416   │
                                       └────────┘
```

$$w(t) = 1 - e^{-\gamma(t_e - t_0)} + e^{-\gamma}$$

FIG. 14

FIG. 15

EP 4 030 383 A1

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 21 19 8398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Stratakos Dean: "Homography Estimation", , 4 November 2020 (2020-11-04), XP055924099, Retrieved from the Internet: URL:https://github.com/dastratakos/Homography-Estimation [retrieved on 2022-05-23] | 1,5-8 | INV. G06T7/33 G06K9/62 G06N3/04 G06N3/00 G06V10/44 G06V10/82 G06V20/56 G06N7/00 |
| Y | * page 1 - page 2 * | 3,4 | |
| X | DAVIDSON C ET AL: "IMPSAC: Synthesis of importance sampling and random sample consensus", IEEE TRANSACTIONS ON PATTERN ANALYSIS AND MACHINE INTELLIGENCE, IEEE COMPUTER SOCIETY, USA, vol. 25, no. 3, March 2003 (2003-03), pages 354-364, XP011095646, ISSN: 0162-8828, DOI: 10.1109/TPAMI.2003.1182098 | 1,2,5-8 | |
| Y | * sections 2, 3 and 5.3 * | 3,4 | |

-/--

**TECHNICAL FIELDS SEARCHED (IPC)**

G06T

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| Munich | 3 June 2022 | Rockinger, Oliver |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04E07)

Europäisches
Patentamt

European
Patent Office

Office européen
des brevets

# PARTIAL EUROPEAN SEARCH REPORT

**Application Number**

EP 21 19 8398

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| X | Pham Trung Thanh ET AL: "Simultaneous Sampling and Multi-Structure Fitting with Adaptive Reversible Jump MCMC", , 2011, XP055924070, Retrieved from the Internet: URL:https://proceedings.neurips.cc/paper/2011/file/beed13602b9b0e6ecb5b568ff5058f07-Paper.pdf [retrieved on 2022-05-23] | 1,2,5-8 | |
| Y | * abstract * * sections 2, 3 and 4 * ----- | 3,4 | |
| X | Pham Trung Thanh ET AL: "Simultaneous Sampling and Multi-Structure Fitting with Adaptive Reversible Jump MCMC", , 2011, XP055924074, Retrieved from the Internet: URL:https://cs.adelaide.edu.au/~trung/lib/exe/fetch.php?media=arjmc_extended_results.pdf [retrieved on 2022-05-23] | 1,2,5-8 | **TECHNICAL FIELDS SEARCHED** (IPC) |
| Y | * the whole document * ----- | 3,4 | |
| Y | Anonymous: "Built-in self-test – Wikipedia", , 9 October 2018 (2018-10-09), XP055924404, Retrieved from the Internet: URL:https://de.wikipedia.org/w/index.php?title=Built-in_self-test&stableid=181641023 [retrieved on 2022-05-24] * the whole document * ----- | 3,4 | |

1

EPO FORM 1503 03.82 (P04C10)

Europäisches
Patentamt
European
Patent Office
Office européen
des brevets

**INCOMPLETE SEARCH**
**SHEET C**

**Claim(s) completely searchable:**
        1-8

**Claim(s) not searched:**
        9-15

**Reason for the limitation of the search:**

**see detailed reasoning in the European Search Opinion**